Europäisches Patentamt

European Patent Office

Office européen des brevets

(19)

(11)     EP 1 308 320 B1

(12)     **EUROPÄISCHE PATENTSCHRIFT**

(45) Veröffentlichungstag und Bekanntmachung des Hinweises auf die Patenterteilung:
**04.10.2006 Patentblatt 2006/40**

(51) Int Cl.:
*B60C 19/00* *(2006.01)*          *B60C 23/06* *(2006.01)*
*G01M 17/02* *(2006.01)*

(21) Anmeldenummer: **02015974.5**

(22) Anmeldetag: **18.07.2002**

(54) **Verfahren zur Ermittlung sich anbahnender Laufstreifenablösung eines Luftreifens bei einem Fahrzeug**

Method for determining starting tread separation of a tyre on a vehicle

Procédé de détermination de l'imminence du détachement de la bande de roulement d'un pneumatique sur un véhicule

(84) Benannte Vertragsstaaten:
**DE FR GB IT**

(30) Priorität: **30.10.2001 DE 10153072**

(43) Veröffentlichungstag der Anmeldung:
**07.05.2003 Patentblatt 2003/19**

(73) Patentinhaber: **Continental Aktiengesellschaft 30165 Hannover (DE)**

(72) Erfinder:
• **Hartmann, Bernd**
  **31542 Bad Nenndorf (DE)**
• **Köbe, Andreas Dr.**
  **64625 Bensheim (DE)**

(56) Entgegenhaltungen:
**EP-A- 1 031 442          US-A- 4 570 152**
**US-A- 6 028 508**

**Beschreibung**

Die Erfindung betrifft ein Verfahren zur Ermittlung sich anbahnender Laufstreifenablösungen eines Luftreifens an einem Fahrzeug

Die ständig steigenden Ansprüche an die Sicherheit von Kraftfahrzeugen erfordern zunehmend eine möglichst umfassende Detektion aller den Fahr- und Bewegungszustand eines Kraftfahrzeuges beeinflussenden und repräsentierenden Parameter zur Nutzung innerhalb intelligenter Systeme zur Fahrwerks- und Fahrzeugsteuerung und -regelung. Insbesondere typische Gefahrensituationen, wie sie etwa bei plötzlichen Ablösungen von Teilen des Laufstreifens auftreten können, sollen sicher erkannt werden und entsprechende Warn- oder Steuersignale auslösen.

Die höchsten Gefahren von plötzlichen Reifenschäden gehen nämlich von Laufflächenablösungen aus, da in den meisten Fällen insbesondere beim Fahren bei hohen Geschwindigkeiten innerhalb von Bruchteilen von Sekunden den Laufstreifenablösungen ein Platzen des Reifens folgt, was zum Verlust der Beherrschbarkeit des Fahrzeuges und zu schweren Unfällen führt.

Das Detektieren und Anzeigen sich anbahnender Laufstreifenablösungen, ein Moment in dem das Fahrzeug noch kontrolliert zum Stehen gebracht werden kann, bereitet = messtechnisch bislang Probleme, da diese Zustände nur schwer erfassbar sind. So hat man sich bislang damit beholfen, über die Anzeige anderer Parameter, welche auf einen kritischen Zustand des Luftreifens hindeuten, auch die Gefahr sich anbahnender oder bereits eingetretener Laufstreifenablösungen mit zu erfassen.

Da bekannt ist, dass ein zu geringer Reifeninnendruck zu kritischen Schäden am Luftreifen führt oder führen kann, wurden schon eine Reihe von Lösungen vorgeschlagen, bei denen der Luftdruck im Reifen erfasst und bei Unterschreiten eines vorgegebenen Sollwertes dem Fahrer angezeigt wird um diesen zum Anhalten des Fahrzeuges zu veranlassen. Derartige Vorschläge sind beispielsweise aus der EP 630 769 A1, der EP 826 525 A2, der EP 787 606 A2 und der EP 786 362 A2. Schließlich ist aus der DE 199 08 701 A1 (EP-A-1 031 442) ein System zur Detektierung eines sogenannten Notlaufzustandes bekannt, das einen Reifen mit Notlaufstützkörper voraussetzt, wobei der Stützkörper Unwuchten aufweist, die durch Kontakt mit der Reifeninnenseite im drucklosen Zustand des Reifens Frequenzen erzeugen, die als Störsignal durch einen Sensor, insbesondere durch ein herkömmliches ABS-System erfassbar sind.

Solche Lösungen machen sich die in vielen Fällen gegebene Korrelation zwischen zu niedrigem Luftdruck und daraus entstehenden Schäden am Reifenaufbau, insbesondere am Laufstreifen, zu nutze. Allerdings ist zu geringer Luftdruck nur eine Ursache für die gefährlichen Laufstreifenablösungen. Denn diese können sich auch völlig unabhängig vom Reifeninnendruck einstellen, beispielsweise durch Überschreiten einer für den Reifentyp zulässigen Höchstgeschwindigkeit. Wenn beispielsweise ein auf 160 km/h begrenzter Winterreifen über einen Zeitraum von ca. 20 min. bei 180 km/h gefahren wird, so kann dies trotz korrektem Luftdruck aufgrund von Überhitzungen zu Laufstreifenablösungen führen. Auch andere Ursachen, welche regelmäßig auf das Fehlverhalten der Fahrer zurückzuführen sind, können trotz vorschriftsmäßig eingehaltenem Luftdruck zu Laufstreifenablösungen führen, wie überalterte Reifen, übermäßig abgenutzte Reifen oder anderes. Auch runderneurte Reifen können problematisch sein.

Mit dem Problem der sich anbahnenden Laufstreifenablösungen beschäftigt sich die US 6 028 508 B1. Dort wird ein Sensor in Form einer Lasers vorgeschlagen, welcher auf den Laufstreifen eines Reifens ausgerichtet ist. Entstehen Wölbungen oder Blasen am Laufstreifen, erkennt der Laser dies durch Veränderung des Abstandes zwischen Laufstreifen und Laser. Eine derartige Anordnung ist aber relativ aufwendig und teuer, da jedem Rad eine Laserquelle beispielsweise innerhalb des Radkastens zugeordnet sein muß. Auch können hier Schmutz- und Fremdkörperansammlungen zwischen den Profilblöcken zu Fehlinterpretationen führen.

US-A-4570152 offenbart ein Verfahren zur Ermittlung sich anbahnender Laufstreifenablösungen eines Luftreifens an einem Fahrzeug, bei dem mindestens an jeder Achse, vorzugsweise an jedem Rad, ein oszillierendes Signal erzeugt wird, das von korrespondierenden Sensoren erfasst wird.

Für die Erfindung bestand daher die Aufgabe, ein Verfahren zur Ermittlung sich anbahnender Laufstreifanablösungen eines Luftreifens an einem Fahrzeug bereitzustellen, welches eine sichere Detektion dieses Defektes in allen Fahrzuständen erlaubt, welches alle auftretenden Stör- und Einflußgrößen toleriert, welches bei allen Reifen- und Fahrzeuggrößen und bei allen Reifenkonstruktionen gleichermaßen einsetzbar ist, welches Meßgrößen sicher und auf einfachste Weise, ohne großen konstruktiven oder meßtechnischen Aufwand erfaßbar macht, und welches zudem wirtschaftlich einsetzbar und für Großserien verfügbar ist.

Gelöst wird die Aufgabe durch die Merkmale der Ansprüche 1 und 13.

Durch die Überlagerung der ersten proportionalen Schwingung durch eine oder mehrere separat definierte, für sich anbahnende Laufstreifenablösungen charakteristische und zur Raddrehzahl proportionale periodische Schwingungen wird ein ausschließlich für sich anbahnende Laufstreifenablösungen spezifisches Charakteristikum erschaffen, welches unabhängig von Einflußgrößen wie Geschwindigkeit, Radlast, Reifenverschleiß, Fahrbahnbelag etc. ein eindeutig erkennbares Signal liefert. Beim Auftreten eines solchen Signales kann daher zweifelsfrei auf das Vorliegen sich anbahnender Laufstreifenablösungen geschlossen werden, ohne daß weitere Überprüfungen des Fahrzustandes erfolgen müssen. In vielen Fällen ist zur sicheren Erkennbarkeit bereits die Überlagerung des Drehzah-Ausgangssignales mit nur einer zweiten für sich anbahnende Laufstreifenablösungen charakteristischen und zur Raddrehzahl proportionalen periodischen Schwingung ausreichend.

Hierbei wird vorteilhafterweise das Drehzahl-Ausgangssignal in Form einer permanent vorhandenen ersten periodischen und zur Raddrehzahl proportionalen Schwingung durch aktive oder passive Magnalfeldsensoren bereitgestellt, wobei relativ zur letzteren rotierende magnetisch aktive oder passive und an mit dem Rad drehenden oder an feststehenden Teilen des Fahrzeuges befindliche Einrichtungen, vorzugsweise Encoder, eine zur Raddrehzahl proportionale periodische Magnetfeldänderung erzeugen.

Durch eine solche Ausbildung des Verfahrens lassen sich einfache und bereits vorhandene und erprobte Meßwertaufnehmer und Signalerzeuger nutzen, so daß der apparative Aufwand verringert wird und eine kostengünstige Produktion der zugehörigen Vorrichtungsteile ermöglicht wird.

In einer vorteilhaften Ausbildung werden die separat definierten für sich anbahnende Laufstreifenablösungen charakteristischen und zur Raddrehzahl proportionalen periodischen Schwingungen erzeugt.

In einer weiteren vorteilhaften Ausbildung des Verfahrens wird das Drehzahl-Ausgangssignal nach einer Verarbeitung in der Signalverarbeitungseinrichtung mit einem oder mehreren Referenz- /oder Schwellenwerten verglichen und mit diesem Vergleich die Überlagerung mit den separaten und für sich anbahnende Laufstreifenablösungen charakteristischen periodischen Schwingungen anhand einer Überschreitung der Referenz- und/oder Schwellenwerte erkannt und zu einem Warnsignal verarbeitet.

Ein solcher an sich bekannter Vergleich mit Referenz- und/oder Schwellenwerten erhöht die Aussagesicherheit bei der Detektion sich anbahnender Laufstreifenablösungen ergebender Signale und eröffnet die Möglichkeit, den Einfluß von Störgrößen weiter zu eliminieren.

Hierbei ist es vorteilhaft, daß das Drehzahl-Ausgangssignal eines Rades oder einer Achse nach einer Verarbeitung in der Signalverarbeitungseinrichtung mit Drehzahl-Ausgangssignalen der übrigen Räder oder Achsen als Referenzwerten verglichen wird. Dies führt zum einen zu einer Lokalisierung sich anbahnender Laufstreifenablösungen und schließt weiterhin aus, daß gleichzeitig auf alle Räder einwirkende Störgrößen, insbesondere bei kurzfristigem Auftreten, nicht zur Auslösung eines Warnsignales führen. Der Vergleich kann hierbei mit Rädern einer Fahrzeugseite, einer Fahrzeugachse oder auch in Form eines Vergleiches mit diagonal gegenüberliegenden Rädern durchgeführt werden.

In einer weiteren vorteilhaften Ausbildung wird in der Signalverarbeitungseinrichtung aus dem Drehzahl-Ausgangssignal die Radgeschwindigkeit für vorgegebene Zeitintervalle errechnet und mit einem oder mehreren Referenz- Radgeschwindigkeiten und / oder Schwellenwerten verglichen, wobei ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach

b) innerhalb von definierten und mehrere aufeinanderfolgende Raddrehwinkel beinhaltenden Zählzeiten $T_L$ aus den für die Teildrehungen ermittelten Zeiten und deren Anzahl eine mittlere Raddrehgeschwindigkeit für eine oder mehrere Radumdrehungen innerhalb der Zählzeiten errechnet und gespeichert wird, wonach

c) die gemittelten Raddrehgeschwindigkeiten bzw. deren Verlauf mit Referenz- und / oder Schwellenwerten verglichen werden, wobei

d) bei Überschreitung der Referenz- und / oder Schwellenwerte ein Warnsignal ausgegeben wird.

Hierbei ist die Basis für die Ermittlung bzw. für die Verarbeitung der entsprechenden Zeiten für die durch die definierten Raddrehwinkel bestimmten Teildrehungen des Rades ein Zeitfenster", nämlich eine definierte Zählzeit oder Meßzeit $T_L$, auch "Loop Time" genannt.

Eine solche Ermittlung der Radgeschwindigkeit beinhaltet lediglich eine relativ einfache Verarbeitung des Drehzahl-Ausgangssignales und reduziert so den Aufwand an elektronischen Verarbeitungseinrichtungen bzw. an Rechnerkapazität und damit die Kosten für die entsprechende Elektronik. Allerdings ist bei einem solchen Verarbeitungsverfahren des Drehzahl-Ausgangssignales zu berücksichtigen, daß bei der Auswertung der Anzahl der erhaltenen Einzelimpulse innerhalb einer definierten Zählzeit $T_L$ auch Karosserie- oder Aufbauschwingungen oder Resonanzen das Auswertungsergebnis - ohne es notwendigerweise in seiner Aussagekraft wesentlich zu schwächen - beeinflussen und verändern, so dass eine Abwägung zwischen möglichst einfacher Auswertung und möglichst genauem Auswertungsergebnis erfolgen muß.

Durch das im erfindungsgemäßen Verfahren vorgesehene Überlagern des Drehzahl-Ausgangssignales mit einer oder mehreren separat definierten und für sich anbahnende Laufstreifenablösungen charakteristischen Schwingungen ist es nämlich möglich, eine solche vereinfachte und auf den Absolutwert der aufgenommenen Geschwindigkeit gerichtete Betrachtung und Auswertung durchzuführen, ohne daß weitere und den Fahrzustand repräsentierende Signale, beispielsweise augenblickliche Längs- oder Querbeschleunigungswerte und Geschwindigkeiten erfaßt werden müssen. Deren Detektion über entsprechende Meßwertaufnehmer erfordert nämlich einen hohen apparativen Aufwand und deren elektronische Verarbeitung führt zu einem wesentlich komplizierteren Aufbau in der Elektronik, was somit entbehrlich wird.

Die überlagerten separaten und für sich anbahnende Laufstreifenablösungen charakteristischen Zusatzschwingungen stellen sich in einer solchen Verfahrensweise als Geschwindigkeitsschwingungen dar, d. h. als periodische Geschwindigkeitsänderungen innerhalb eines Radumlaufs, die durch die sich anbahnenden Laufstreifenablösungen in differentiell kleinen Zeitabschnitten geänderten Abrollradius erzeugt werden. Diese Schwingungen bewirken dabei eine deutlich merkbare Veränderung der Anzahl der aus dem binären Signal ermittelten Zählimpulse innerhalb des Zählintervalls $T_L$ (Loop-Time).

Eine weitere vorteilhafte Ausbildung des Verfahrens besteht darin, daß ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach

b) ein Mittelwert aus mehreren solchen aufeinanderfolgend ermittelten Zeiten für eine oder mehrere Radumdrehungen errechnet und gespeichert wird, wonach

c) die Abweichungen der gem. a) ermittelten und gespeicherten Zeiten von dem gem. b) errechneten Mittelwert ermittelt werden, und danach

d) die ermittelten Abweichungen mit Referenz- und / oder Schwellenwerten verglichen werden, wobei

e) bei Überschreitung der Referenz- und / oder Schwellenwerte ein Warnsignal ausgegeben wird.

In diesem Fall ist die Basis für die Ermittlung bzw. für die Verarbeitung der entsprechenden Zeiten für die durch die definierten Raddrehwinkel bestimmten Teildrehungen des Rades nicht etwa ein "Zeitfenster", sondern die Teildrehung des Rades als solche, d.h. also die Betrachtung eines definierten Raddrehwinkels bzw. eines "Winkel-Fensters".

Bei den üblicherweise verwandten Sensoreinrichtungen, die gezahnten Polräder oder ähnliche Elemente als Encoder beinhalten, erfolgt dabei in aller Regel zunächst eine Umwandlung des Drehzahl-Ausgangssignales in ein Signal aus Einzelimpulsen bzw. in ein Rechtecksignal. Dies geschieht dabei so, daß die Flanken des Rechtecksignales mit den das Drehzahl-Ausgangssignal repräsentierenden Durchgangs-Signalen der Magnetfeldsensoren, die durch die einzelnen Zähne eines gezahnten Polrades erzeugt werden, so korreliert sind, daß eine Rechteckschwingung des Rechtecksignales beispielsweise einen durch den Durchgang eines Zahnes des Polrades definierten Raddrehwinkel darstellt.

Bei den für die Messung kurzer Zeiten gebräuchlichen Zeitmeßeinrichtungen (Timer), die üblicherweise digitale Eingangssignale zur Verarbeitung benötigen, kann dann die Messung der Zeiten für die durch die definierten Raddrehwinkel bestimmten Teildrehungen des Rades durch die Ermittlung des Flankenabstandes, d.h. der Zeitdifferenzen zwischen den Flanken des Rechtecksignales erfolgen. Sinnvollerweise betrachtet man bei einer solchen Auswertung einer Rechteckschwingung den Flankenabstand bzw. die Zeitdifferenz zwischen den Nulldurchgängen der Flanken des Rechtecksignales, also immer an einer repräsentativen und gleichen Stelle des Signales.

Selbstverständlich kann statt einer Rechteckschwingung auch jede andere geeignet aufbereitete Schwingung zur Ermittlung der entsprechenden Zeiten für Teildrehungen des Rades genutzt werden.

Es werden hierbei also die Zeiten für Teildrehungen des Rades über die Zeitdifferenzen zwischen den Nulldurchgängen (Nulldurchgangszeiten) direkt gemessen, d.h. die zeitlichen Abstände $\Delta T_{0(i)}$ (t) zwischen den Flanken einer Rechteckschwingung, wobei $\Delta T_0$ die Nulldurchgangszeit jeweils für die Ermittlungen / Messungen i, i+1, i+2 etc. darstellt.

Im Hinblick auf die Mittelwertbildung gemäß Merkmal b) besteht neben der Mittelung von mehreren aufeinanderfolgend ermittelten oder errechneten Werten einer Radumdrehung eine besonders geeignete Art der Auswertung darin, daß die einzelnen ermittelten Zeiten für die durch die definierten Raddrehwinkel bestimmten Teildrehungen des Rades vor der weiteren Verarbeitung zunächst einer drehsynchronen Mittelung in der Art unterzogen werden, daß über mehrere Radumdrehungen aus den in Bezug auf eine Radumdrehung in gleichen Zeitintervallen bzw. in gleichen Drehwinkelintervallen gemessenen Zeiten ein Mittelwert für mehrere Radumdrehungen gebildet wird, der dann der weiteren Signalverarbeitung zugrunde liegt.

Bei einer solchen drehsynchronen Mittelung werden also die am Rad aufgenommenen und nach einer Verarbeitung bereits als "Zeitwerte" vorliegenden Signale, die in Bezug auf eine Radumdrehung in gleichen Zeitintervallen bzw. in gleichen Drehwinkelintervallen aufgenommen werden, d.h. also die Signale, die etwa durch dieselben Zähne eines Polrades oder Encoders im Verlauf einer einzelnen Radumdrehung erzeugt werden, über mehrere Radumdrehungen gemittelt. Hierdurch läßt sich der Einfluß von Signalrauschen oder von kurzfristig einwirkenden Störgrößen, wie etwa Fahrbahnunebenheiten etc., weiter reduzieren und die Aussagekraft des Signals verstärken, da die dann auffälligen Zeiten für die Teildrehungen mit einer für sich anbahnende Laufstreifenablösungen charakteristischen separat definierten Schwingung des Rades sich von dem in der Regel durch übrige Störgrößen erzeugten Einflüssen auf die Zeiten deutlich unterscheiden.

Eine solche Art der Mittelung eignet sich ebenfalls sowohl für die bereits genannte Auswertung auf der Basis der definierten Zählzeiten (Loop Time) als auch für andere, durch eine Verarbeitung des Drehzahl-Ausgangssignal entstehenden Werte, beispeilsweise für die Frequenzen, die Radgeschwindigkeiten etc., wie nachfolgend noch beschrieben wird.

Insgesamt wird durch diese Ausbildung des Verfahrens einerseits ein überaus präzises und von Aufbau- und Karosserieschwingungen nahezu völlig unbeeinflußtes Auswertungsergebnis ermöglicht, und andererseits steht mit der Ermittlung der Zeiten für die durch die definierten Raddrehwinkel bestimmten Teildrehungen des Rades, bzw. mit der Ermittlung der Nulldurchgangszeiten, eine Eingangs- oder Zwischengröße zur Verfügung, die durch weitere einfache Rechenschritte in Kenntnis der geometrischen Abhängigkeiten am Rad oder Reifen zu Aussagen über die augenblickliche Radgeschwindigkeit oder die Radbeschleunigung weiterverarbeitet oder auch einer Mustererkennung oder einer Frequenzauswertung unterzogen werden kann, wie nachfolgend noch beschrieben wird.

Zur Frequenzauswertung ist in einer weiteren vorteilhaften Ausbildung des Verfahrens vorgesehen, daß ausgehend von der das Drehzahl-Ausgangssignal repräsentierenden Schwingung in der Signalverarbeitungseinrichtung

> a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach
> b) mit Hilfe einer oder mehrerer Recheneinheiten die Frequenzen der gem. a) ermittelten und gespeicherten Zeiten durch Kehrwertbildung errechnet und danach gespeichert werden, wobei anschließend
> c) ein Mittelwert der gem. b) ermittelten Frequenzen für eine oder mehrere Radumdrehungen errechnet und gespeichert wird, wonach
> d) die Abweichungen der gem. b) ermittelten und gespeicherten Frequenzen von dem gem. c) errechneten Mittelwert ermittelt werden, und danach
> e) die ermittelten Abweichungen mit Referenz- und / oder Schwellenwerten verglichen werden, wobei
> f) bei Überschreitung der Referenz- und / oder Schwellenwerte ein Warnsignal ausgegeben wird.

Eine Berechnung der Frequenzen durch Kehrwertbildung erfolgt hierbei beispielsweise entsprechend der Formel $f_{(i)}(t) = 0,5 / \Delta T_{0(i)}(t)$, wobei f die ermittelte Frequenz und $\Delta T_{0(i)}(t)$ die Nulldurchgangszeit jeweils für die Ermittlungen / Messungen i, i+1, i+2 etc. darstellen. Der Faktor 0,5 resultiert in diesem Falle aus den jeweils 2 gemessenen Nulldurchgangszeiten bei einer Schwingungsperiode des sinusförmigen Drehzahl-Ausgangssignales eines Rades.

Auch hier ist gem. Merkmal c) neben der Mittelung von mehreren aufeinanderfolgend ermittelten oder errechneten Werten einer Radumdrehung eine drehsynchrone Mittelung vorgesehen, bei der die am Rad aufgenommenen und nach einer Verarbeitung bereits als "Frequenzwerte" vorliegenden Signale, die in Bezug auf eine Radumdrehung in gleichen Drehwinkelintervallen aufgenommen werden, über mehrere Radumdrehungen gemittelt werden. Hierdurch läßt sich, wie bereits dargestellt, der Einfluß von Signalrauschen oder von kurzfristig einwirkenden Störgrößen, wie etwa Fahrbahnunebenheiten etc., weiter reduzieren und die Aussagekraft des Signals verstärken, da die dann auffällige Frequenz der für sich anbahnende Laufstreifenablösungen charakteristischen separat definierten Schwingung, beispielweise ausgebildet als harmonische Schwingung nter Ordnung der Reifenperiode, sich von dem in der Regel durch übrige Störgrößen erzeugten Einflüssen deutlich unterscheidet.

Eine alternative vorteilhafte Ausbildung des Verfahrens im Hinblick auf die Auswertung von Frequenzen besteht darin, daß ausgehend von der das Drehzahl-Ausgangssignal repräsentierenden Schwingung in der Signalverarbeitungseinrichtung

> a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach
> b) mit Hilfe einer oder mehrerer Recheneinheiten das Frequenzspektrum der gem. a) ermittelten und gespeicherten Zeiten einer Frequenzanalyse zur Ermittlung der spektralen Leistungsdichte (power spectral density) unterzogen wird, wobei anschließend
> c) mit Hilfe einer oder mehrerer Recheneinheiten die ermittelten spektralen Leistungsdichten einer Integration über bestimmte ausgewählte Frequenzintervalle unterzogen und danach gespeichert werden, wonach
> d) der Integralwert der ausgewählten Frequenzintervalle verglichen wird mit einem Referenz- oder Schwellenwert, und
> e) bei Überschreitung der Referenz- oder Schwellenwerte ein Warnsignal ausgegeben wird.

Eine solche Frequenzanalyse kann beispielweise in Form einer Fourrieranalyse durchgeführt werden, was sowohl durch eine Recheneinheit als auch - analog - durch eine Schaltungsanordnung erfolgen kann.

Solche Auswertungen bzw. Verfahrensweisen können jeweils allein oder zusätzlich zur Auswertung der Standardabweichungen der Nulldurchgangszeiten durchgeführt werden. Die Auswertungen der Frequenzanalyse und der nachfolgenden Integration über ausgewählte Frequenzintervalle bieten den Vorteil, daß die Aussagesicherheit dadurch weiter gesteigert werden kann, da die dann auffällige Ordnung der Frequenz der für sich anbahnende Laufstreifenablösungen charakteristischen separat definierten Schwingung, beispielweise ausgebildet als harmonische Schwingung n-ter Ordnung der Reifenperiode, auf einfache Weise bestimmt werden kann, da sie sich von dem in der Regel durch übrige Störgrößen erzeugten Einflüssen noch deutlicher unterscheidet.

In einer Weiterbildung der Erfindung kann vorgesehen sein, dass als ausgewählte Frequenzintervalle genau solche verwendet werden, die einem Vielfachen der Raddrehfrequenz entsprechen, wobei vorzugsweise niedere Vielfache der Raddrehfrequenz (n = 1,2,3) betrachtet werden.

Eine weitere und in diesem Sinne das Auswerteergebnis verdeutlichende vorteilhafte Weiterbildung des Verfahrens besteht darin, daß ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach

b) mit Hilfe einer oder mehrerer Recheneinheiten aus den gem. a) ermittelten und gespeicherten Zeiten die augenblicklichen Radgeschwindigkeiten errechnet und danach gespeichert werden, wobei anschließend

c) ein Mittelwert der gem. b) ermittelten Radgeschwindigkeiten für eine oder mehrere Radumdrehungen errechnet und gespeichert wird, wonach

d) die Abweichungen der gem. b) ermittelten und gespeicherten Radgeschwindigkeiten von dem gem. c) errechneten Mittelwert ermittelt werden, und danach

e) die ermittelten Abweichungen mit Referenz- und / oder Schwellenwerten verglichen werden, wobei

f) bei Überschreitung der Referenz- und / oder Schwellenwerte ein Warnsignal ausgegeben wird.

Eine Berechnung der Radgeschwindigkeiten erfolgt hierbei beispielsweise entsprechend der Formel $v_{(i)}$ (t) = 0,02m / $\Delta T_{0(i)}$ (t), wobei v die Radgeschwindigkeit und $\Delta T_0$ die Nulldurchgangszeit jeweils für die Ermittlungen / Messungen i, i+1, i+2 etc. darstellen. Der Abrollumfang des Rades / Reifens während der Nulldurchgangszeit beträgt in diesem Fall 0,02m. Eine solche Auswertung der Radgeschwindigkeiten unterscheidet im Hinblick auf das Ermittlungsverfahren von der bereits genannten und auf der Auswertung der Zeiten für die Teildrehungen des Rades innerhalb einer "Loop Time", da hier für die Ermittlung bzw. für die Verarbeitung der entsprechenden Zeiten für die durch die definierten Raddrehwinkel bestimmten Teildrehungen die Teildrehung des Rades als solche, d.h. also die Betrachtung eines definierten Raddrehwinkels zugrunde gelegt wird.

Ebenso läßt sich in einer anderen vorteilhaften Ausbildung des Verfahrens das Auswerteergebnis dadurch verdeutlichen, daß ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach

b) mit Hilfe einer oder mehrerer Recheneinheiten aus den gem. a) ermittelten und gespeicherten Zeiten die augenblicklichen Radbeschleunigungen errechnet und danach gespeichert werden, wobei anschließend

c) ein Mittelwert der gem. b) errechneten Radbeschleunigungen für eine oder mehrere Radumdrehungen errechnet und gespeichert wird, wonach

d) die Abweichungen der gem. b) errechneten Radbeschleunigungen von dem gem. c) errechneten Mittelwert oder von einem Nullwert ermittelt werden, und danach

e) die ermittelten Abweichungen mit Referenz- und / oder Schwellenwerten verglichen werden, wobei

f) bei Überschreitung der Referenz- und / oder Schwellenwerte ein Warnsignal ausgegeben wird.

Eine Berechnung der Radbeschleunigungen erfolgt hierbei beispielsweise entsprechend der Formel $a_{(i)}$ (t) = [$v_{(i)}$ - $v_{(i-1)}$]/$\Delta T_{0(i)}$ (t), wobei a die Radbeschleunigung, v die Radgeschwindigkeit und $\Delta T_0$ die Nulldurchgangszeit jeweils für die Ermittlungen / Messungen i-1, i, i+1, i+2 etc. darstellen.

Beide Verfahrensausbildungen, nämlich das der Geschwindigkeitsanalyse und das der Beschleunigungsanalyse können allein oder zusätzlich zur Auswertung der Standardabweichungen der Nulldurchgangszeiten oder der Frequenzen / Frequenzanalyse durchgeführt werden, wobei jede weitere oder zusätzliche und auf der Eingangs- oder Zwischengröße "Nulldurchgangszeiten" beruhende Auswertung Vorteile im Hinblick auf eine gesteigerte Aussagesicherheit bietet. So können beispielsweise beim Abrollen der Räder auf einem sehr unebenen, ggf. stark riffeligem oder mit Bodenwellen oder -vertiefungen versehenem Untergrund durch die verschiedenen Auswerteverfahren die Drehzahl-Ausgangssignale anhand mehrerer Schwellenwerte überprüft werden, wonach mit hoher Sicherheit das Auftreten einer für sich anbahnende Laufstreifenablösungen charakteristischen Schwingung von jeglichen Störgrößen unterschieden werden kann.

Im übrigen können bei der Verwendung von Sensoreinrichtungen, die gezahnte Polräder oder ähnliche Elemente als Encoder beinhalten, alle Auswerteverfahren zusätzlich auch so ausgebildet werden, daß Fehlinterpretationen des Signals durch etwa vorhandene Teilungsfehler der Zahnung oder auch andere Toleranzen in den mechanischen Elementen oder in den elektronischen Bauteilen dadurch vermieden werden, daß die Verarbeitung der Signale ein "Lernen" und eine Selbstkalibrierung des Gesamtsystems beinhaltet. Dies kann z.B. dadurch erfolgen, daß im Normalzustand, d.h. bei der Fahrt ohne sich anbahnende Laufstreifenablösungen, regelmäßig auftretende Abweichungen erkannt und deren Signalanteil vom ermittelten Basissignal abgezogen werden.

Besonders vorteilhaft läßt sich ein Verfahren zur Ermittlung sich anbahnender Laufstreifenablösungen eines Luftreifens für Fahrzeugräder innerhalb eines Kontrollsystems für luftbereifte Fahrzeugräder verwenden, insbesondere innerhalb eines Anti-Blockier-Systems (ABS), wobei durch das Kontrollsystem mindestens an jeder Achse, vorzugsweise an jedem Rad, eine permanent vorhandene erste periodische und zur Raddrehzahl proportionale Schwingung erzeugt und als Drehzahl-Ausgangssignal einer Signalverarbeitungseinrichtung des Kontrollsystems zugeleitet wird, wobei sich anbahnender Laufstreifenablösungen eine separat definierte, für sich anbahnende Laufstreifenablösungen charakteristische und zur Raddrehzahl proportionale zweite periodische Schwingung der ersten Schwingung bzw. dem Drehzahl-Ausgangssignal überlagert wird, und wobei die Signalverarbeitungseinrichtung des Kontrollsystems eine Überlagerung der ersten periodischen Schwingung mit der separaten zweiten periodischen Schwingung detektiert und zu einem Warnsignal für sich anbahnende Laufstreifenablösungen verarbeitet.

Durch eine solche Verwendung des Verfahrens ergibt sich eine besonders leichte Einbindung und Integration innerhalb bereits ausgereifter und geprüfter Systeme zur Überprüfung der Fahrzeugdaten, so daß lediglich wenige Änderungen in den hierzu nötigen Vorrichtungen und in der dazu erforderlichen Elektronik durchzuführen sind, um die Kapazität eines solchen Kontrollsystems, beispielsweise eines Anti-Blockier-Systems, um die wichtige Aussage zu erweitern, ob sich anbahnende Laufstreifenablösungen bei einem Rad vorliegen. Die Nutzung der vorhandenen Meßaufnehmer und der Auswerteelektronik erlaubt es dann, eine definierte Aussage über sich anbahnende Laufstreifenablösungen in besonders wirtschaftlicher Weise, auch bei der Großserie zu erreichen.

In einer praktischen Ausführung der Erfindung kann vorgesehen sein, dass der errechnete Mittelwert zunächst um einen ersten Referenzwert bereinigt wird, welcher Fertigungstoleranzen des ABS-Signalgebers (Encoders) für das jeweilige Rad repräsentiert.

In einer besonders bevorzugten Ausführung der Erfindung kann vorgesehen sein, dass parallel zur Erfassung des Drehzahl-Ausgangssignals der Reifeninnendruck durch einen Druckerfasungseinrichtung ermittelt wird, wobei Abweichungen von einem vorgegebenen Sollwert um einen vorbestimmten Betrag zu einem für den Fahrer wahrnehmbaren Signal führen.

Es kann unter bestimmten Bedingungen nämlich vorkommen, dass der Luftdruck im Inneren des Reifens abnimmt, wenn sich Laufstreifenablösungen anbahnen. Die Veränderung des Luftdrucks, also insbesondere die Verringerung des Druckes, kann sich negativ auf das charakteristische Signal auswirken, insofern, als dass dieses Signal bzw. die Frequenz vergleichmäßigt wird und daher nicht als Abweichung erfasst wird. Eine gleichzeitige Erfassung des Reifeninnendrucks kann daher als Korrelationsgröße herangezogen werden, um gefährliche Zustände zu erfassen. Dies insbesondere, was gemäß einer weiteren vorteilhaften Ausgestaltungen der Erfindung vorgesehen sein kann, dass der durch die Druckerfassungseinrichtung ermittelte Druckwert in Korrelation zum Drehzahl-Ausgangssignal gebracht wird.

In einer praktischen Ausgestaltung der Erfindung kann ferner vorgesehen sein, dass als Druckerfassungseinrichtung ein Deflation Detection System (DDS) verwendet wird, bei welchem luftdruckbedingte Veränderungen des Abrollumfangs des Reifens ermittelt werden.

Anhand eines Ausführungsbeispiels soll die Erfindung näher erläutert werden. Es zeigen:

Fig. 1      eine Prinzipskizze zur Anordnung einer erfindungsgemäßen Vorrichtung innerhalb eines Kraftfahrzeuges

Fig. 2      eine prinzipielle Darstellung einer im Stand der Technik vorhandenen und mit einer aktiven Gebereinrichtung versehenen Sensoreinrichtung für die Raddrehzahl

Fig. 3      eine prinzipielle Darstellung einer im Stand der Technik vorhandenen und mit einer passiven Gebereinrichtung versehenen Sensoreinrichtung für die Raddrehzahl

Fig. 4      eine prinzipielle Darstellung einer im Stand der Technik vorhandenen und mit einer aktiven Gebereinrichtung in Form von in der Reifenseitenwand angeordneten permanentmagnetischen Arealen versehenen Sensoreinrichtung für die Raddrehzahl

Fig. 5a      ein Diagramm, welches die Auswertung der verarbeiteten und mit Hilfe der Sensoreinrichtungen über die Raddrehzahl ermittelten Radgeschwindigkeiten der einzelnen Räder innerhalb definierter Zählzeiten (Loops) zeigt

Fig. 5b      ein vergrößerte Darstellung (Lupe) des in Fig. 5a markierten Zeitintervalls

Fig. 6a      das Zeitverhalten einer ungestörten und mit Hilfe von Sensoreinrichtungen ermittelten und zur Raddrehzahl proportionalen Schwingung (normales Drehzahl-Ausgangssignal) bei konstanter Geschwindigkeit

Fig. 6b      das Zeitverhalten einer mit Hilfe von Sensoreinrichtungen ermittelten und zur Raddrehzahl proportionalen Schwingung mit überlagerter Schwingung n-ter Ordnung der Reifenperiode (überlagertes Drehzahl-Ausgangssignal) im Vergleich zum normalen Drehzahl-Ausgangssignal gem. Fig. 6a ,

Fig. 7a      die über einer Zeitachse aufgetragenen Nulldurchgangszeiten $\Delta T_{0(i)}$ (t) (Nulldurchgangszeiten-Signal) des normalen und des überlagerten Drehzahl-Ausgangssignales gem. Fig. 6b, die mit Hilfe einer die Zeitdifferenzen zwischen den Nulldurchgängen der erhaltenen Einzelimpulse messenden Zeitkontrolleinrichtung (Timer) ermittelt wurden,

Fig. 7b die über einer Zeitachse aufgetragenen und durch Kehrwertbildung aus den Nulldurchgangszeiten gem. Fig. 7a ermittelten Frequenzen,

Fig. 7c die über einer Zeitachse aufgetragene und aus den Nulldurchgangszeiten gem. Fig. 7a errechnete Radgeschwindigkeit,

Fig. 7d die über einer Zeitachse aufgetragene und aus den Radgeschwindigkeiten gem. Fig. 7c errechnete Radbeschleunigung,

Fig. 7e die mit Hilfe einer Frequenzanalyse des Nulldurchgangszeiten-Signales gem. Fig. 7a ermittelte spektrale Leistungsdichte, aufgetragen über der Frequenz,

Fig. 7f die über einer Zeitachse aufgetragene und aus den Nulldurchgangszeiten errechneten Radgeschwindigkeiten aller vier Räder nach Auswertung realer und am fahrenden Fahrzeug aufgenommener Drehzahl-Ausgangssignale,

Fig. 8 eine schematische Darstellung einer auf der verfahrensgemäßen Auswertung der Anzahlen der erhaltenen Einzelimpulse innerhalb einer definierten Zählzeit $T_L$ (Loop-Time) des normalen bzw. überlagerten Drehzahl-Ausgangssignales beruhenden Signalverarbeitung einer erfindungsgemäßen Vorrichtung als Ablaufplan

Fig. 9 eine schematische Darstellung einer auf der verfahrensgemäßen Auswertung der Nulldurchgangszeiten $\Delta T_{0(i)}$ (t) beruhenden Signalverarbeitung einer erfindungsgemäßen Vorrichtung als Ablaufplan

Fig. 10 eine schematische Darstellung der Signalverarbeitung einer erfindungsgemäßen Vorrichtung als Ablaufplan, bei der eine auf der Kehrwertbildung beruhende Berechnung der Frequenzen mehrerer aufeinanderfolgender Messungen der Nulldurchgangszeiten erfolgt

Fig. 11 zeigt eine schematische Darstellung der Signalverarbeitung einer erfindungsgemäßen Vorrichtung als Ablaufplan, bei der mit Hilfe einer Recheneinheit das Frequenzspektrum der Nulldurchgangszeiten in Abhängigkeit von der Zeit (Zeiten-Signal) einer Frequenzanalyse zur Ermittlung der spektralen Leistungsdichte (power spectral density) unterzogen wird

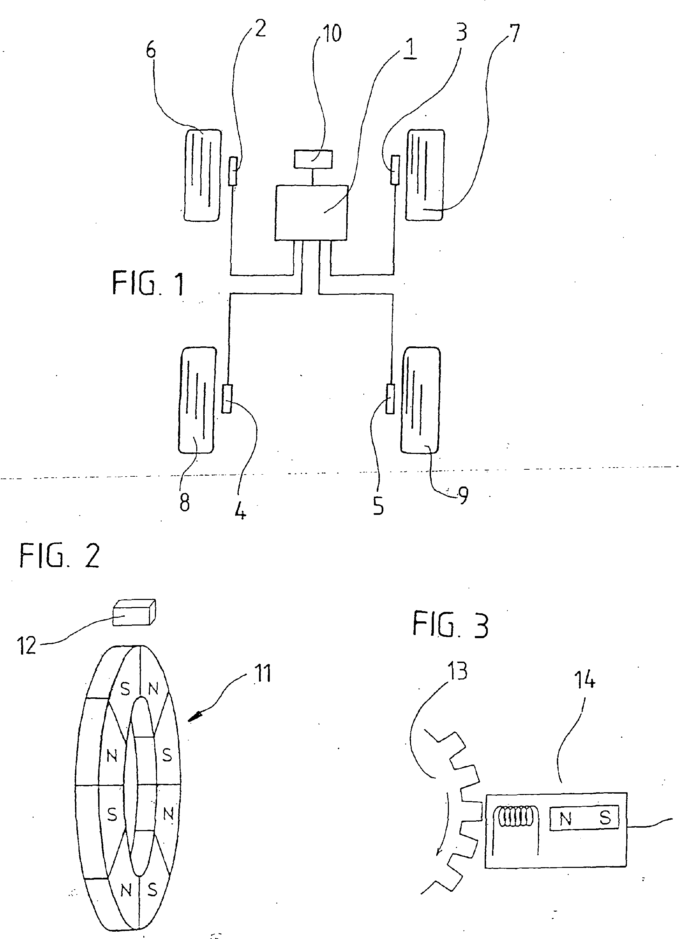

Die Figur 1, die die Anordnung einer erfindungsgemäßen Vorrichtung innerhalb eines Kraftfahrzeuges darstellt, zeigt zunächst eine zentrale Rechner- bzw. Auswerteeinheit 1, die mit Sensoreinrichtungen 2-5 verbunden ist, welche wiederum den einzelnen Rädern 6-9 zugeordnet sind.

Die Sensoreinrichtungen detektieren die Drehzahl-Ausgangssignale der einzelnen Räder und leiten diese an die zentrale Rechnereinheit weiter, welche ausgangsseitig mit einer Anzeige- und Warneinrichtung 10 verbunden ist, etwa mit einer im Sichtfeld des Fahrers am Armaturenbrett angeordneten optischen Warnanzeige.

Die zentrale Rechnereinheit beinhaltet eine Signalverarbeitungseinheit mit allen Einrichtungen zur Auswertung und zum Vergleich der Drehzahlausgangssignale der einzelnen Räder sowie zur Erzeugung eines Warnsignals in der Anzeigeeinrichtung 10.

Die Figur 2 zeigt die prinzipielle Darstellung der in der erfindungsgemäßen Vorrichtung eingesetzten und an sich bekannten Sensoreinrichtung, wobei je eine aktive Gebereinrichtung in Form eines mit den jeweiligen Rad rotierenden Polrades 11 vorhanden ist, welches eine periodische Magnetfeldänderung in dem Magnetfeldsensor 12 erzeugt, die als Drehzahlausgangssignal in Form einer zur Raddrehzahl proportionalen periodischen Schwingung in der zur zentralen Rechnereinheit gehörigen Signalverarbeitungseinrichtung ausgewertet und verarbeitet wird.

Die Figur 3 zeigt eine prinzipielle Darstellung einer alternativen und ebenfalls im Stand der Technik vorhandenen Sensoreinrichtung, wobei hier eine passive Gebereinrichtung in Form eines auf seinem Umfang gezahnten metallischen Rades 13 vorhanden ist, dessen Drehzahl über einen hierfür ausgebildeten Magnetfeldsensor 14 detektiert wird.

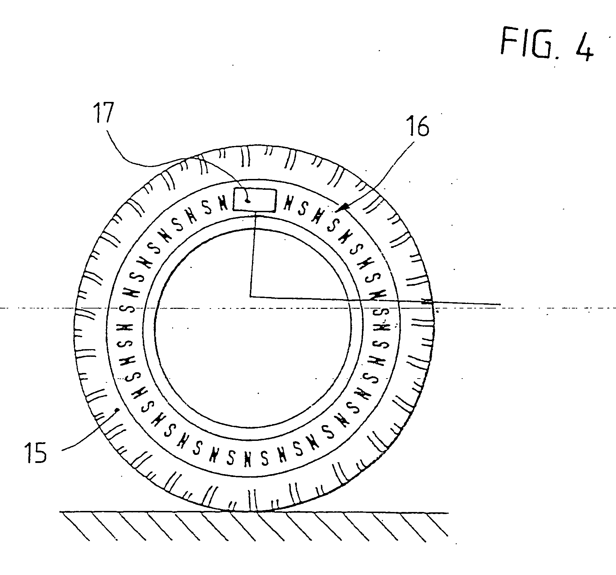

Die Figur 4 zeigt eine weitere bekannte Alternative einer Sensoreinrichtung in prinzipieller Darstellung, wobei wiederum eine aktive Gebereinrichtung in Form von in der Reifenseitenwand 15 angeordneten permanentmagnetischen Arealen 16 angeordnet sind. Die Drehzahl eines solchermaßen ausgerüsteten Reifens wird dann über einen entsprechend ausgebildeten Magnetfeldsensor 17 detektiert.

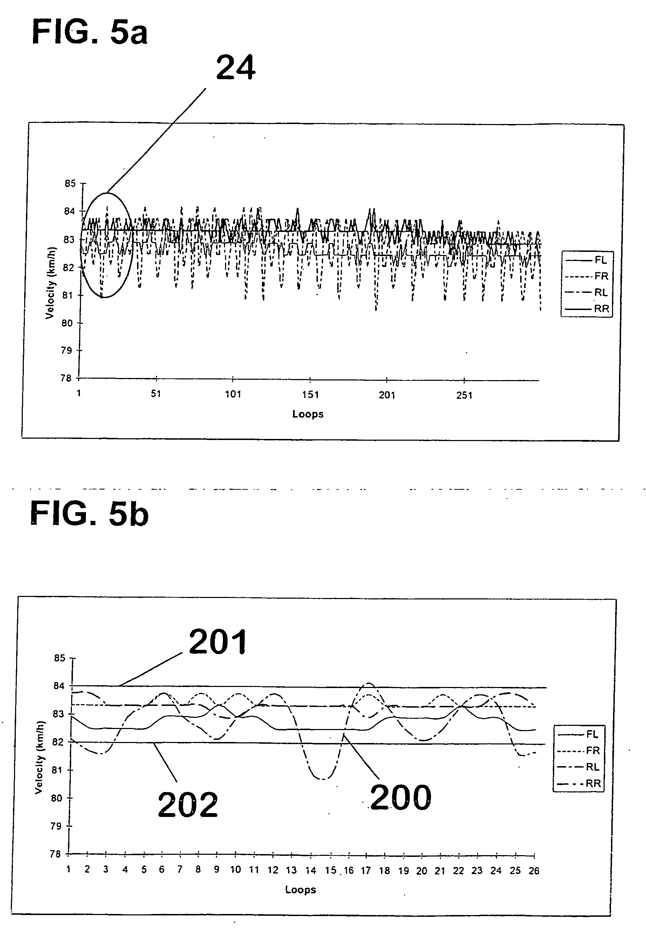

Die Figur 5a zeigt ein Diagramm, welches die Auswertung der in der Signalverarbeitungseinrichtung verarbeiteten und mit Hilfe der Sensoreinrichtungen über die Raddrehzahl ermittelten Radgeschwindigkeiten der einzelnen Räder innerhalb definierter Zählzeiten $T_L$ (Loop-Time) zeigt.

Die definierten Zählzeiten sind hier auf der Abszisse dargestellt, während die Ordinate die Radgeschwindigkeiten der einzelnen Räder beinhaltet. Das Diagramm zeigt dabei synchron die Radgeschwindigkeiten aller vier Räder, nämlich des linken Vorderrades (FL = Front left) des rechten Vorderrades (FR = Front right), des linken Hinterrades (RL = Rear left) und des rechten Hinterrades (RR = Rear right).

Deutlicher erkennbar werden die unterschiedlichen Radgeschwindigkeiten in der Figur 5b, die eine vergrößerte Darstellung (Lupe) des in der Figur 5a markierten Zeitinvalls 24 darstellt.

Die Figuren 5a und 5b zeigen hierbei die verfahrensgemäße Auswertung für ein Fahrzeug, dessen linkes Hinterrad (RL) sich anbahnende Laufstreifenablösungen zeigt.

Man erkennt hier bereits bei einer sehr einfachen Geschwindigkeitsauswertung, daß der Geschwindigkeitsverlauf des linken Hinterrades sich deutlich detektierbar von den Geschwindigkeitsverläufen der übrigen Räder unterscheidet, wobei hier etwa 11 Zählzeiten (Loops) eine Radumdrehung repräsentieren. Die den Geschwindigkeitsverlauf des linken Hinterrades repräsentierende Geschwindigkeitskurve 200, deren Charakteristik durch eine separat definierte und zur Raddrehzahl proportionale periodische Schwingung erzeugt wird, läßt sich leicht und mit herkömmlichen Mitteln durch Referenz- oder Schwellenwerte 201 und 202 für die Radgeschwindigkeit überprüfen und als sich anbahnende Laufstreifenablösungen repräsentative Geschwindigkeitskurve detektieren, auch wenn diese durch Karosserie- oder Aufbauschwingungen und Resonanzen beeinflußt ist.

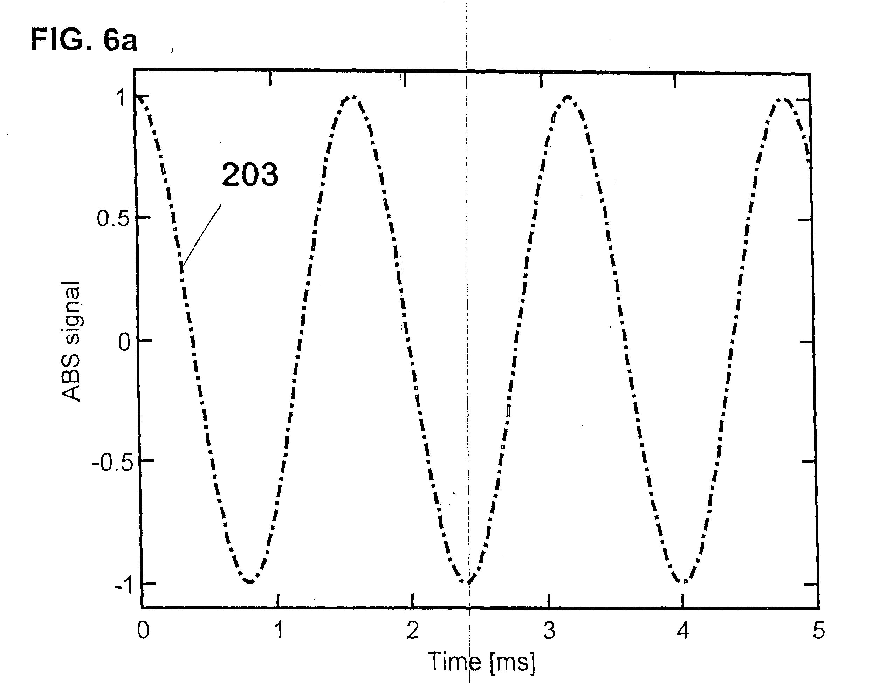

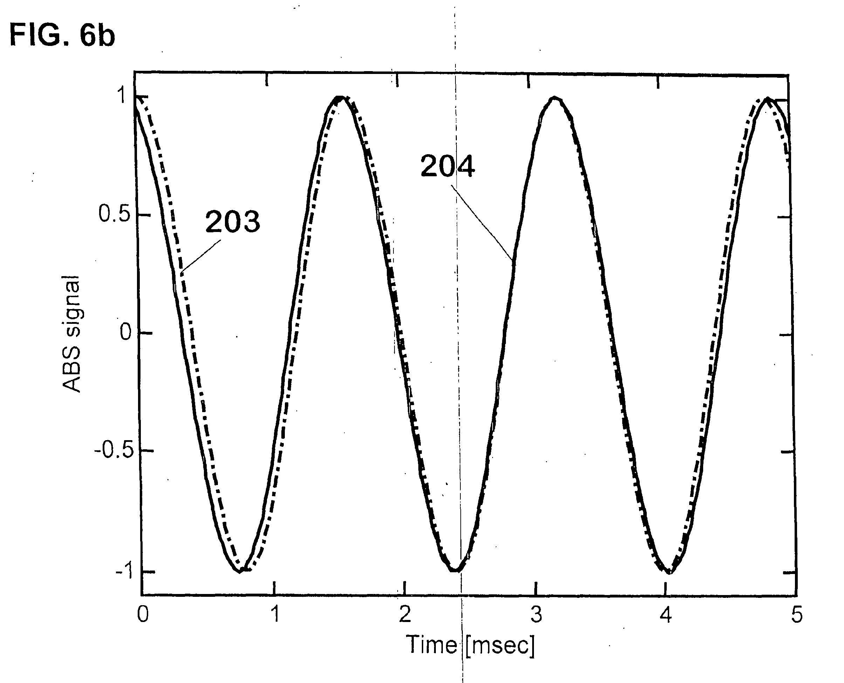

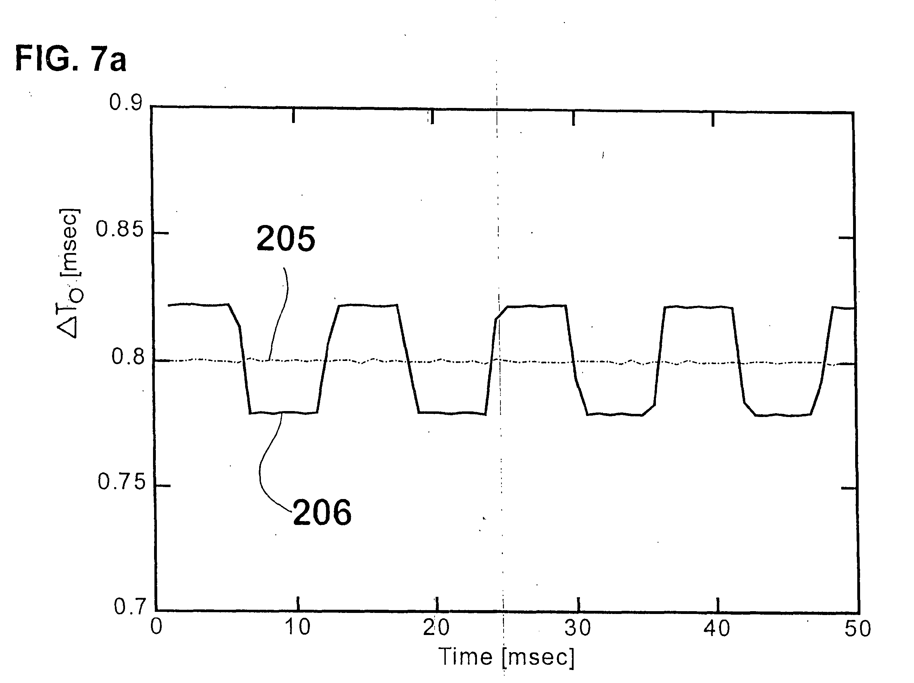

Die Figuren 6a und 6b und 7a - 7e zeigen die deutliche Erkennbarkeit einer dem Drehzahl-Ausgangssignal überlagerten für sich anbahnende Laufstreifenablösungen charakteristischen und separat definierten, zur Raddrehzahl proportionalen Schwingung, die durch typische Unregelmäßigkeiten in Form von Unwuchten erzeugt wird.

In diesen prinzipiellen und lediglich qualitativen Darstellungen zeigt die Figur 6a zunächst das durch die Kurve 203 dargestellte Zeitverhalten eines normalen Drehzahl-Ausgangssignales, beispielweise eines ABS-Signales, bei konstanter Geschwindigkeit ohne sich anbahnende Laufstreifenablösungen, d.h. im Normalzustand.

Treten nun unregelmäßige Schwingungen auf, so erhält man das in der Figur 6b durch die Kurve 204 qualitativ gezeigte Zeitverhalten des überlagerten Drehzahl-Ausgangssignales, dargestellt im Vergleich zum nicht überlagerten, d.h. normalen Drehzahl-Ausgangssignal gem. Kurve 203.

Die Figur 7a zeigt die über einer Zeitachse aufgetragenen ermittelten Zeiten für die durch die definierten Raddrehwinkel bestimmten Teildrehungen des Rades in Form eines Nulldurchgangszeiten-Signales $\Delta T_{0(i)}$ (t) des normalen und des überlagerten Drehzahl-Ausgangssignales gem. Fig. 6b anhand der Kurven 205 und 206, das mit Hilfe einer die Zeiten / Zeitdifferenzen zwischen den Nulldurchgängen der erhaltenen Einzelimpulse messenden Zeitkontrolleinrichtung (Timer) ermittelt wurde.

Hierbei erkennt man, daß die Nulldurchgangszeiten des normalen Drehzahl-Ausgangssignales gem. Fig. 6b entsprechend der Kurve 205 im wesentlichen konstant bleiben und bei etwa bei 0,8 msec liegen, abgesehen von sich durch leichte Schwankungen zeigenden störenden Einflüsse, wie sie beispielsweise durch Geschwindigkeitsänderungen, Fahrbahnbelag, Signalrauschen etc. entstehen können.

Die Nulldurchgangszeiten des überlagerten Drehzahl-Ausgangssignales gem. Fig. 6b weisen entsprechend der Kurve 206 demgegenüber deutliche merkbare periodische Abweichungen von etwa 0,02 msec auf und schwanken im Hinblick auf ihren Absolutwert zwischen etwa 0,78 und 0,82 msec.

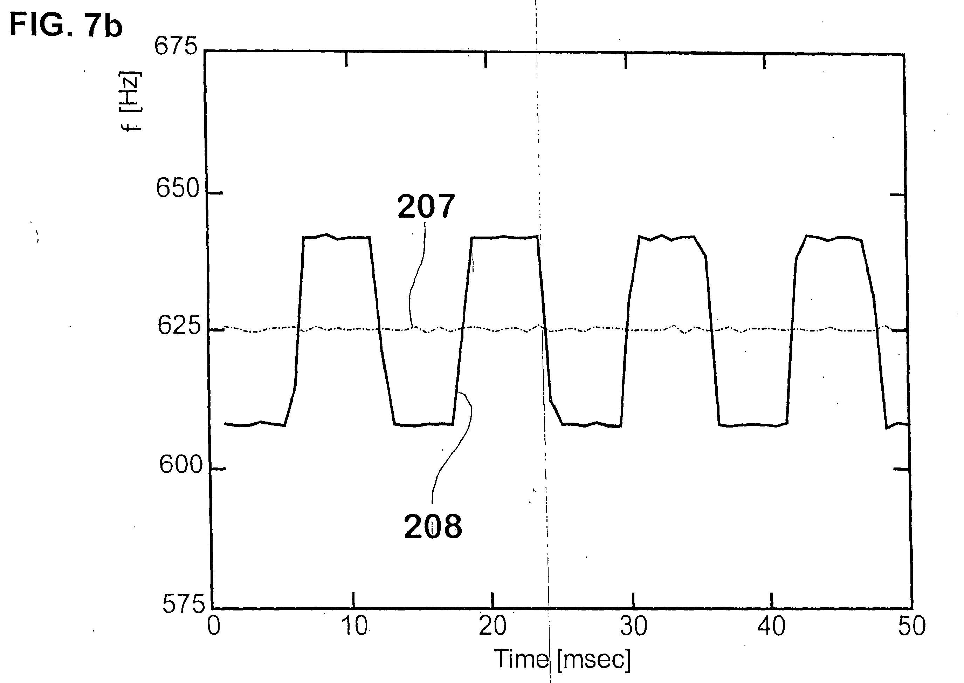

Die Figur 7b zeigt hierzu die über einer Zeitachse aufgetragenen und durch Kehrwertbildung entsprechend der bereits beschriebenen Formel $f_{(i)}$ (t) = 0,5 / $\Delta T_{0(i)}$ (t) ermittelten Frequenzen der Nulldurchgangszeiten gem. Fig. 7a. Auch hier wird deutlich, daß die ermittelten Frequenzen der Nulldurchgangszeiten des normalen Drehzahl-Ausgangssignales gem. Fig. 6b entsprechend der Kurve 207 im wesentlichen konstant bleiben und in diesem Fall bei etwa bei 625 Hz liegen, abgesehen wieder von sich lediglich durch leichte Schwankungen zeigenden störenden Einflüssen.

Die entsprechend ermittelten Frequenzen der Nulldurchgangszeiten des überlagerten Drehzahl-Ausgangssignales gem. Fig. 7a weisen entsprechend der Kurve 208 demgegenüber deutliche merkbare und besonders klar detektierbare periodische Abweichungen auf, wobei die Frequenzen im Hinblick auf ihren Absolutwert zwischen etwa 610 Hz und 640 Hz schwanken.

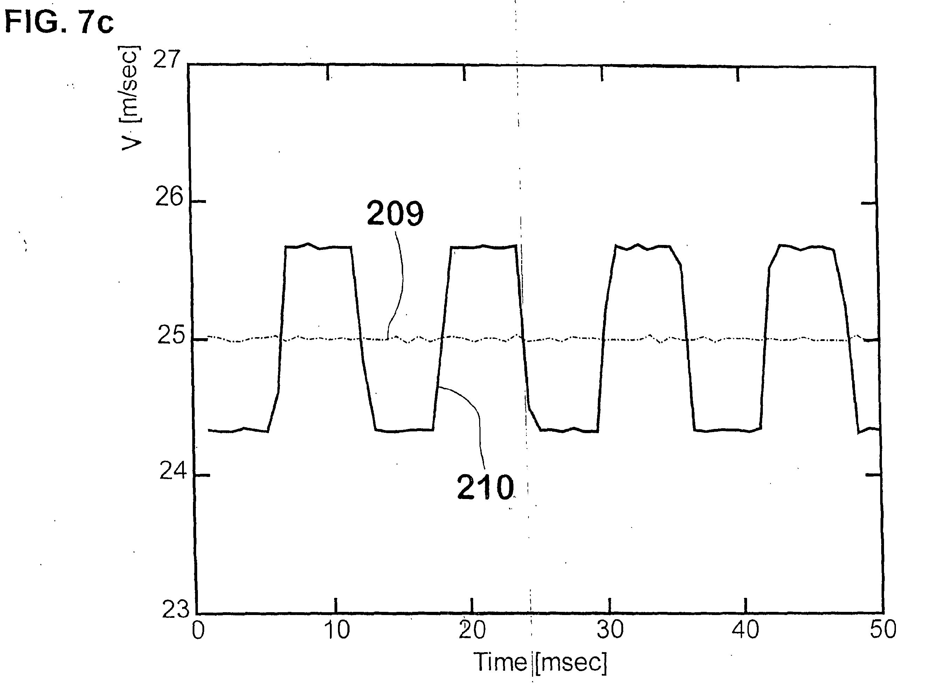

Die Figur 7c zeigt hierzu die über einer Zeitachse aufgetragenen und aus Nulldurchgangszeiten gem. Fig. 7a entsprechend der bereits beschriebenen Formel $v_{(i)}$ (t) = 0,02m / $\Delta T_{0(i)}$ (t) ermittelten Radgeschwindigkeiten. Auch hier wird deutlich, daß die aus dem normalen Drehzahl-Ausgangssignales ermittelten Radgeschwindigkeiten entsprechend der Kurve 209 im wesentlichen konstant bleiben und in diesem Fall bei etwa bei 25 m/sec liegen, während die aus dem überlagerten Drehzahl-Ausgangssignal ermittelten Radgeschwindigkeiten entsprechend der Kurve 210 demgegenüber klar detektierbare periodische Abweichungen aufweisen, wobei die Radgeschwindigkeiten im Hinblick auf ihren Absolutwert zwischen etwa 24,2 m/sec und 25,8 m/sec schwanken.

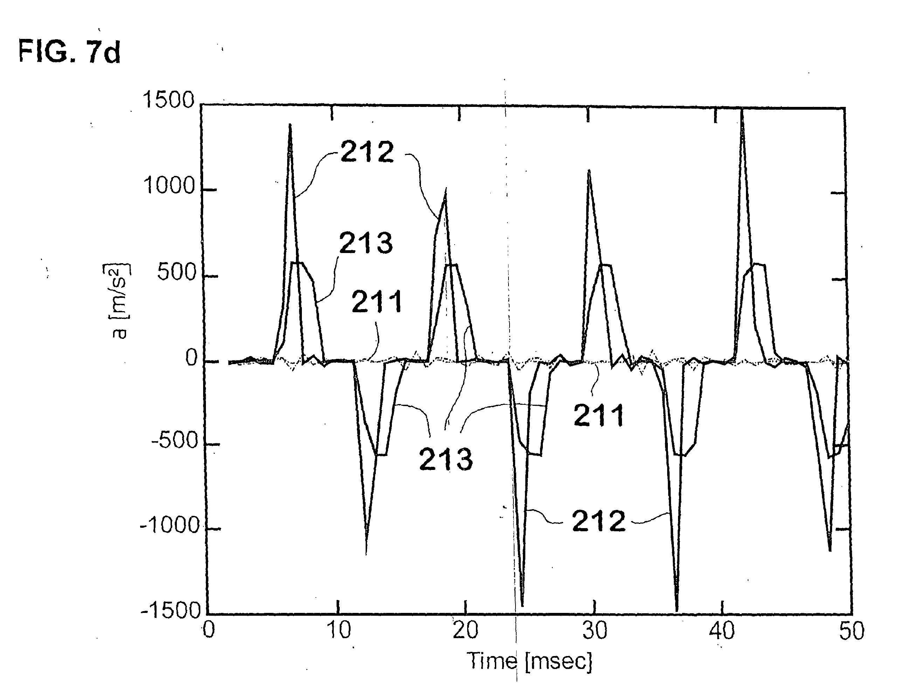

Die Figur 7d zeigt die über einer Zeitachse aufgetragene und aus den Radgeschwindigkeiten gem. Fig. 7c nach der bereits beschriebenen Formel $a_{(i)}$ (t) = [$v_{(i)}$ - $v_{(i-1)}$/$\Delta T_{0(i)}$ (t) errechnete Radbeschleunigung. Hier ist erkennbar, daß die aus den Radgeschwindigkeiten des normalen Drehzahl-Ausgangssignales ermittelten Radbeschleunigungen gemäß der Kurve 211 im wesentlichen konstant bleiben, während die aus den Radgeschwindigkeiten des überlagerten Drehzahl-Ausgangssignales ermittelten Radbeschleunigungen entsprechend der Kurve 212 demgegenüber klar detektierbare periodische Abweichungen aufweisen. Die Kurve 213 zeigt zeigt hierbei die durch Mittelwertbildung gefilterten Radbeschleunigungen der Kurve 212. Eine solche Filterung kann gelegentlich sinnvoll werden, da aufgrund des aufrauhenden Charakters einer Differentiation die Beschleunigungskurven oftmals besonders verrauscht sind, sodaß nach der Filterung eine sicherere und leichtere Auswertung erfolgen kann.

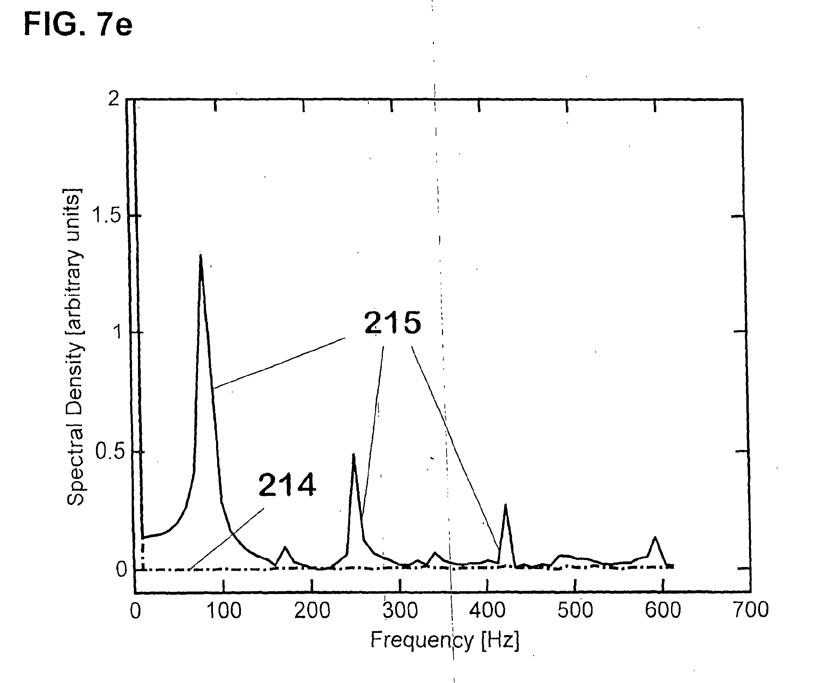

Die Figur 7e zeigt die mit Hilfe einer Frequenzanalyse des Nulldurchgangszeiten-Signales gem. Fig.

7a, hier nämlich mit Hilfe einer schnellen Fourier-Transformation (FFT), ermittelte spektrale Leistungsdichte (spectral density), aufgetragen über der Frequenz. Hierbei erkennt man, daß die aus dem Nulldurchgangszeiten-Signal des überlagerten Drehzahl-Ausgangssignales ermittelte spektrale Leistungsdichte gemäß der Kurve 215 deutliche Spitzen (peaks) zeigt im Vergleich zu der aus dem Nulldurchgangszeiten-Signal des normalen Drehzahl-Ausgangssignales ermittelten spektrale Leistungsdichte gemäß Kurve 214. Die hier gezeigten "peaks" entstehen in Form und und Anordnung durch eine mit Hilfe von 13 gleichmäßig über den Umfang verteilten Einbuchtungen auf einem Sich anbahnende Laufstreifenablösungenstützkörper erzeugten harmonischen Schwingung 13. Ordnung der Reifenperiode, wobei die zu betrachtenden Frequenzintervalle u.a. abhängig sind von der Ordnung der überlagerten Schwingung und von der Radgeschwindigkeit. Zur weiteren Auswertung bildet man in solchen bestimmten Frequenzbereichen das Integral über die Kurven spektraler Leistungsdichte und vergleicht diese mit Referenz- oder Schwellenwerten oder auch untereinander.

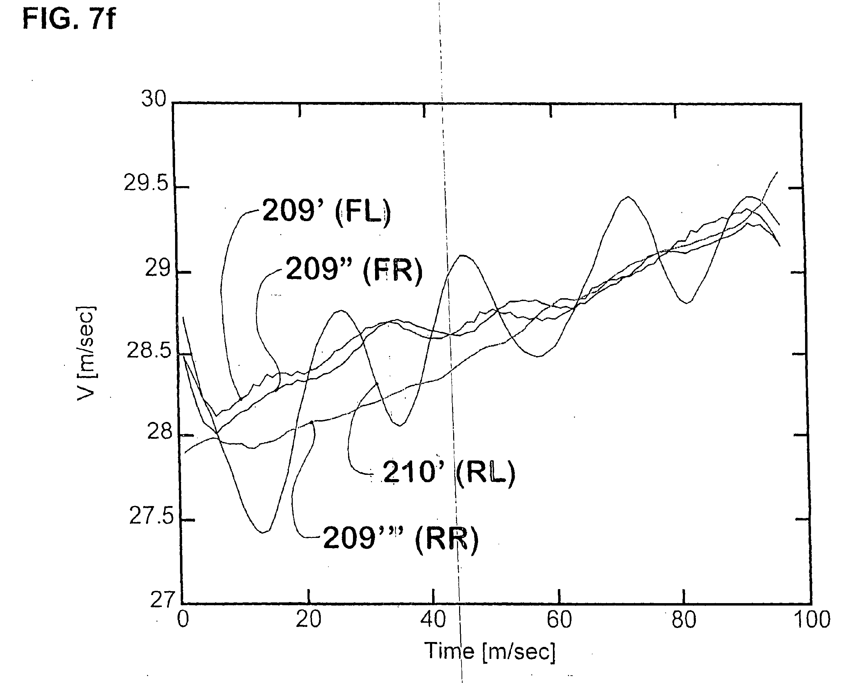

Die Fig. 7f zeigt im Gegensatz zu den obigen qualitativen Darstellungen die Auswertung realer und am fahrenden Fahrzeug aufgenommener Drehzahl-Ausgangssignale, wobei hier die aus Nulldurchgangszeiten entsprechend der bereits beschriebenen Formel $v_{(i)}(t) = 0{,}02m / \Delta T_{0(i)}(t)$ ermittelten Radgeschwindigkeiten aller vier Räder - ähnlich der qualitativen Darstellung für ein Rad in der Fig. 7c - gezeigt sind. Zur besseren Erkennbarkeit und zur Minderung des Einflusses des Signalrauschens wurde hier eine Mittelung über sechs nacheinanderfolgende Berechungen der Nulldurchgangszeiten (sechs Flankensignale) durchgeführt.

Anhand dieser Auswertung wird die durch das erfinderische Verfahren ermöglichte zweifelsfreie Detektion des Sich anbahnende Laufstreifenablösungenes unter realen Gegebenheiten besonders deutlich. Die aus dem normalen Drehzahl-Ausgangssignales ermittelten Radgeschwindigkeiten - entsprechend den Kurve 209' (FL), 209" (FR) und 209''' (RR) - bleiben bis auf Störgrößen und Signalrauschen im wesentlichen konstant bzw. annähernd gleichförmig steigend auch bei der hier vorhandenen Geschwindigkeitserhöhung (Beschleunigung), während die aus dem überlagerten Drehzahl-Ausgangssignal des anbahnende Laufstreifenablösungen aufweisenden linken Hinterrades (RL) ermittelten Radgeschwindigkeiten entsprechend der Kurve 210' demgegenüber klar detektierbare periodische Abweichungen aufweisen.

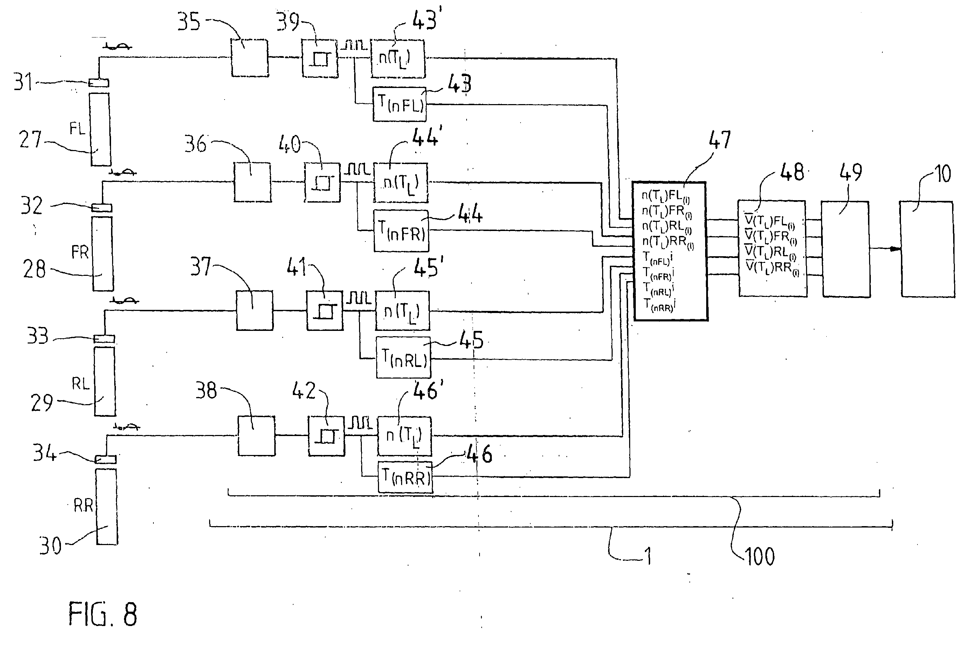

Die Figur 8 zeigt eine schematische Darstellung einer auf der verfahrensgemäßen Auswertung der Anzahlen der erhaltenen Einzelimpulse innerhalb einer definierten Zählzeit $T_L$ (Loop-Time) des normalen bzw. überlagerten Drehzahl-Ausgangssignales beruhenden Signalverarbeitung einer erfindungsgemäßen Vorrichtung als Ablaufplan, wobei bei dem hier gezeigten Verarbeitungsschema eine mittlere Raddrehgeschwindigkeit innerhalb von definierten und mehrere aufeinanderfolgende Raddrehwinkel beinhaltenden Zählzeiten $T_L$ ermittelt wird aus den für die Teildrehungen ermittelten Zeiten und deren Anzahl für eine oder mehrere Radumdrehungen innerhalb der Zählzeiten $T_L$ (Loop-Time).

Schematisch dargestellt sind hier zunächst die an den einzelnen Rädern vorn links (FL), vorn rechts (FR), hinten links (RL) und hinten rechts (RR) angeordnete Sensoreinrichtungen, die aus den als Polräder gemäß der Fig. 2a ausgebildeten aktiven Gebereinrichtungen 27-30 und den jeweils zugeordneten Magnetfeldsensoren 31-34 bestehen.

Die durch die Sensoreinrichtungen detektierten Drehzahl-Ausgangssignale werden dann an die zur zentralen Rechnereinheit 1 gehörigen Signalverarbeitungseinrichtung 100 weitergeleitet und hier mit Hilfe der Tiefpaß-Filter 35-38 von hochfrequenten Rauschanteilen gefiltert, wonach die das Drehzahl-Ausgangssignal repräsentierende Schwingung über Schmitt-Trigger 39-42 in ein Rechtecksignal aus Einzelimpulsen umgewandelt wird.

Die so entstandenen Einzelimpulse aus den Drehzahl-Ausgangssignalen der einzelnen Räder gelangen dann zu den Zeitkontrolleinrichtungen 43 bis 46 (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen (Nulldurchgangszeiten) zwischen zwei auf- bzw. absteigenden und mit den Zeiten für die Teildrehungen korrelierenden Flanken des Rechtecksignales erfolgt.

Parallel hierzu werden die Einzelimpulse des Rechtecksignales den Zähleinrichtungen 43' bis 46' zugeleitet zur Ermittlung der Anzahl n $(T_L)$ der erhaltenen Einzelimpulse bzw. der gemessenen Zeiten innerhalb einer definierten Zählzeit $T_L$

Die Anzahlen der erhaltenen Einzelimpulse mehrerer aufeinander folgender Zählzeiten, hier die Anzahlen n $(T_L)_{FL(i)}$, n $(T_L)_{FR(i)}$, n $(T_L)_{RL(i)}$, und n $(T_L)_{RR(i)}$ von 10 aufeinander folgenden Zählzeiten (i = 1-10) der jeweils verarbeiteten Drehzahl-Ausgangssignale der einzelnen Räder, sowie auch die ermittelten Zeiten für die durch die definierten Raddrehwinkel bestimmten Teildrehungen des Rades werden dann dem Speicher 47 eingelesen und durch eine nachgeschaltete Rechnerschaltung 48 weiterverarbeitet, in der eine Berechnung und ggf. Speicherung der mittleren Raddrehgeschwindigkeiten V $(T_L)_{FL(i)}$, V $(T_L)_{FR(i)}$, V $(T_L)_{RL(i)}$, und V $(T_L)_{RR(i)}$ innerhalb der Zählzeiten $T_L$ für eine oder mehrere Radumdrehungen aus den für die Teildrehungen ermittelten Zeiten und deren Anzahlen innerhalb der Zählzeiten $T_L$ erfolgt.

Die gemittelten Raddrehgeschwindigkeiten werden dann in einer Vergleichseinrichtung 49 mit Referenz- und/oder Schwellenwerten verglichen, wobei die Vergleichseinrichtung bei Überschreitung einer vorgegebenen Differenz zu den Referenz- und/oder Schwellenwerten ein Signal an die Anzeigeeinrichtung 10 übermittelt, welche im Sichtbereich des Fahrers im Armaturenbrett angeordnet ist.

Die zentrale Rechnereinheit 1 beinhaltet im weiteren hier nicht näher dargestellte Einrichtungen zur Energieversorgung und-leitung, ggf. zur Signalverstärkung und zur Signalübertragung, Kühleinrichtungen etc., wie sie üblicherweise in solchen auch als MikroRechner bezeichneten Einheiten vorhanden und notwendig sind.

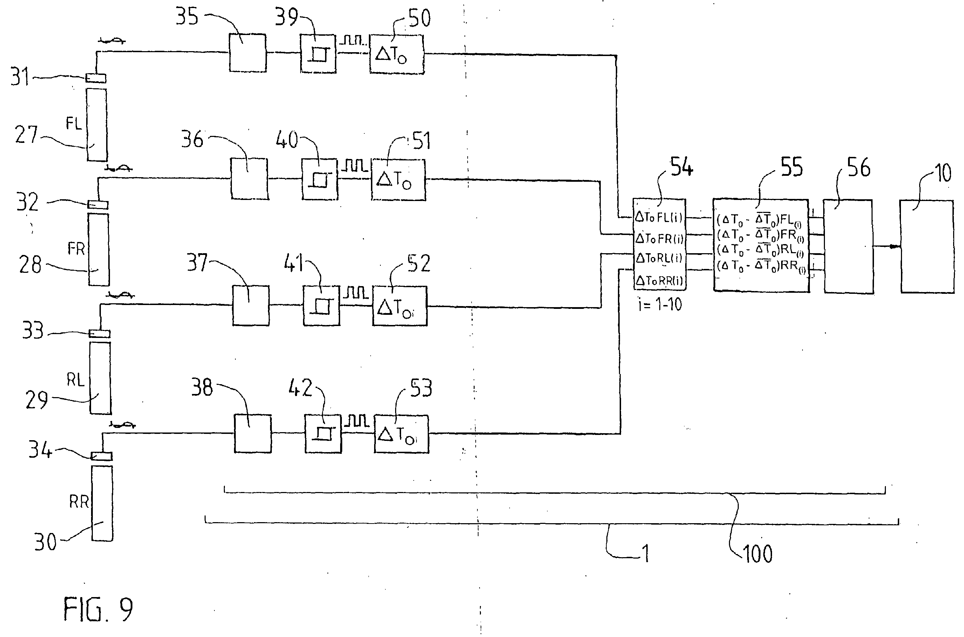

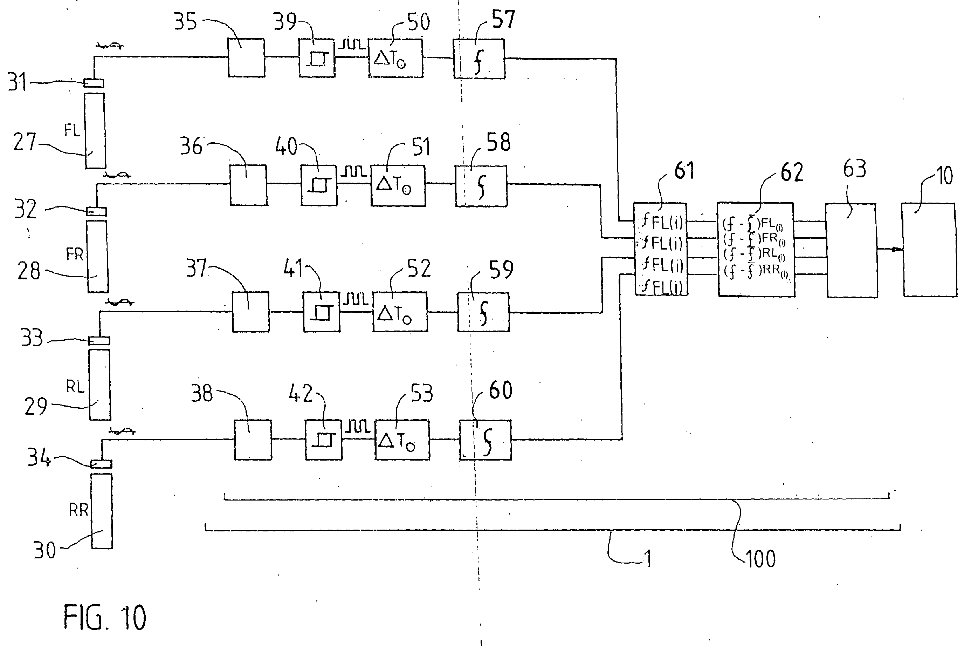

Die Zeitkontrolleinrichtungen 43 bis 46 sowie die Zähleinrichtungen 43' bis 46' könnern hierbei auch, ebenso wie etwa die in den Fig. 9 und 10 dargestellten Zeitkontrolleinrichtungen (Timer), als jeweils eine "Multiplex"-Einrichtung ausgebildet sein, die in kurzen Zeitabständen die einzelnen Drehzahl-Ausgangssignale der Achsen oder Räder zeitlich nacheinander verarbeitet.

Die Figur 9 zeigt eine schematische Darstellung einer auf der verfahrensgemäßen Auswertung der Nulldurchgangszeiten $\Delta T_{0(i)}$ (t) beruhenden Signalverarbeitung einer erfindungsgemäßen Vorrichtung als Ablaufplan, bei der die Zeiten für Teildrehungen des Rades über die Zeitdifferenzen zwischen den Nulldurchgängen (Nulldurchgangszeiten) direkt gemessen werden, d.h. die zeitlichen Abstände $\Delta T_{0(i)}$ (t) zwischen den Flanken einer Rechteckschwingung, wobei $\Delta T_0$ die Nulldurchgangszeit jeweils für die Ermittlungen / Messungen i, i+1, i+2 etc. darstellt.

Schematisch dargestellt sind hier wiederum zunächst die an den einzelnen Rädern vorn links (FL), vorn rechts (FR), hinten links (RL) und hinten rechts (RR) angeordneten Sensoreinrichtungen, die aus den als Polräder gemäß der Fig. 2a ausgebildeten aktiven Gebereinrichtungen 27-30 und den jeweils zugeordneten Magnetfeldsensoren 31-34 bestehen.

Wie bereits bei der in der Figur 8 dargestellten Signalverarbeitung werden auch hier die durch die Sensoreinrichtung detektierten Drehzahl-Ausgangssignale an die zur zentralen Rechnereinheit 1 gehörigen Signalverarbeitungseinrichtung 100 weitergeleitet und hier mit Hilfe der Tiefpaß-Filter 35-38 von hochfrequenten Rauschanteilen gefiltert, wonach die das Drehzahl-Ausgangssignal repräsentierende Schwingung über Schmitt-Trigger 39-42 in ein Rechtecksignal aus Einzelimpulsen umgewandelt wird.

Die jeweils erhaltenen Einzelimpulse aus den Drehzahl-Ausgangssignalen der einzelnen Räder gelangen dann zu den Zeitkontrolleinrichtungen 50 bis 53 (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen $\Delta T_{0(i)}$ (t) zwischen zwei auf- bzw. absteigenden und mit den Zeiten für die Teildrehungen korrelierenden Flanken des Rechtecksignales (Nulldurchgangszeiten) erfolgt.

In einem nachgeschalteten Speicher 54 werden die Nulldurchgangszeiten $\Delta T_{0FL(i)}$, $\Delta T_{0FR(i)}$, $\Delta T_{0RL(i)}$, und $\Delta T_{0RR(i)}$ mehrerer aufeinander folgender Zeitmessungen der jeweils verarbeiteten Drehzahl-Ausgangssignale der einzelnen Räder abgelegt, wobei hier jeweils 10 aufeinander folgende Zeitmessungen (i = 10) gespeichert werden.

In einer nachfolgenden Rechnerschaltung 55 werden die Abweichungen der Zeiten für die Teildrehungen des Rades von den hier für eine oder mehrerere Radumdrehungen berechneten Mittelwerten der Zeiten für die Teildrehungen des Rades bzw. der Nulldurchgangszeiten mehrerer aufeinander folgender Messungen ermittelt und einer Vergleichseinrichtung 56 zugeleitet, welche die ermittelten Abweichungen mit Referenz- und/oder Schwellenwerten vergleicht und bei Überschreitung einer vorgegebenen Differenz zu den Referenz- und/oder Schwellenwerten ein Warnsignal an die Warneinrichtung 10 abgibt, die wiederum im Blickfeld des Fahrers im Armaturenbrett angeordnet ist.

Die Figur 10 zeigt eine schematische Darstellung der Signalverarbeitung einer erfindungsgemäßen Vorrichtung als Ablaufplan, bei der eine auf der Kehrwertbildung beruhende Berechnung der Frequenzen mehrerer aufeinanderfolgender Messungen der Nulldurchgangszeiten erfolgt.

Wiederum sind hier zunächst schematisch dargestellt die an den einzelnen Rädern vorn links (FL), vorn rechts (FR), hinten links (RL) und hinten rechts (RR) angeordneten Sensoreinrichtungen, die aus den als Polräder gemäß der Fig. 2a ausgebildeten Gebereinrichtungen 27-30 und den jeweils zugeordneten Magnetfeldsensoren 31-34 bestehen.

Die durch die Sensoreinrichtungen detektierten Drehzahl-Ausgangssignale werden dann an die zur zentralen Rechnereinheit 1 gehörigen Signalverarbeitungseinrichtung 100 weitergeleitet und hier mit Hilfe der Tiefpaß-Filter 35-38 von hochfrequenten Rauschanteilen gefiltert, wonach die das Drehzahl-.Ausgangssignal repräsentierende Schwingung über Schmitt-Trigger 39-42 in ein Rechtecksignal aus Einzelimpulsen umgewandelt wird.

Die jeweils erhaltenen Einzelimpulse aus den Drehzahl-Ausgangssignalen der einzelnen Räder gelangen dann zu den Zeitkontrolleinrichtungen 50 bis 53 (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen $\Delta T_{0(i)}$ (t) zwischen zwei auf- bzw. absteigenden und mit den Zeiten für die Teildrehungen korrelierenden Flanken des Rechtecksignales (Nulldurchgangszeiten) erfolgt.

Die so erhaltenen Nulldurchgangszeiten werden dann den Recheneinheiten 57 - 60 zugeleitet, in denen eine Berechnung der Frequenzen der Nulldurchgangszeiten durch Kehrwertbildung entsprechend der Formel $f_{(i)}$ (t) = 0,5 / $\Delta T_{0(i)}$ (t) erfolgt, wobei $f_{(i)}$ (t) die ermittelte Frequenz und $\Delta T_{0(i)}$ (t) die Nulldurchgangszeit jeweils für die Ermittlungen / Messungen i, i+1, i+2 etc. darstellen. Der Faktor 0,5 resultiert in diesem Falle aus den jeweils 2 gemessenen Nulldurchgangszeiten bei einer Schwingungsperiode des hier sinusförmigen Drehzahl-Ausgangssignales eines Rades.

In einem nachgeschalteten Speicher 61 werden die aus den Nulldurchgangszeiten ermittelten Frequenzen $f_{FL(i)}$, $f_{FR(i)}$, $f_{RL(i)}$, und $f_{RR(i)}$ mehrerer aufeinander folgender entsprechender Verarbeitungen der jeweiligen Drehzahl-Ausgangssignale der einzelnen Räder abgelegt, wobei hier jeweils 10 aufeinander folgende Frequenzermittlungen (i = 10) gespeichert werden.

In einer nachfolgenden Rechnerschaltung 62 werden die Abweichungen der Frequenzen von den hier für eine oder mehrerere Radumdrehungen berechneten Mittelwerten der Frequenzen für mehrere aufeinander folgende Frequenzermimlungen berechnet und einer Vergleichseinrichtung 63 zugeleitet, welche die ermittelten Abweichungen mit Referenz- und/oder Schwellenwerten vergleicht und bei Überschreitung einer vorgegebenen Differenz zu den Referenz- und/oder Schwellenwerten ein Warnsignal an die im Blickfeld des Fahrers angeordnete Warneinrichtung 10 abgibt.

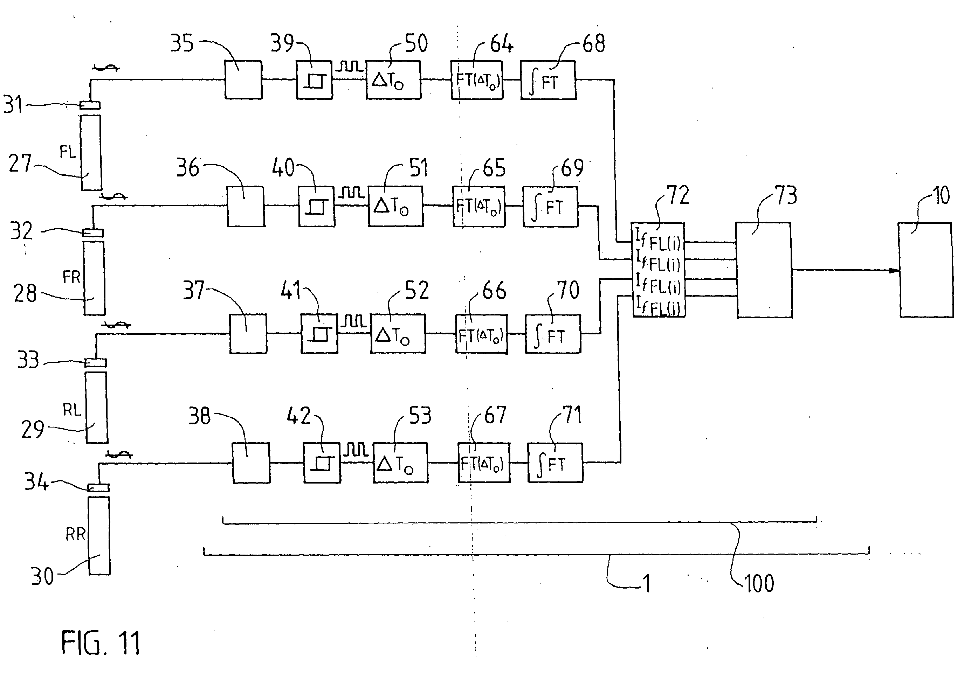

Die Figur 11 zeigt eine schematische Darstellung der Signalverarbeitung einer erfindungsgemäßen Vorrichtung als Ablaufplan, bei der mit Hilfe einer Recheneinheit das Frequenzspektrum der Nulldurchgangszeiten in Abhängigkeit von der Zeit (Nulldurchgangszeiten-Signal) einer Frequenzanalyse zur Ermittlung der spektralen Leistungsdichte (power spectral density) unterzogen wird.

Wiederum sind hier zunächst schematisch dargestellt die an den einzelnen Rädern vorn links (FL), vorn rechts (FR), hinten links (RL) und hinten rechts (RR) angeordneten Sensoreinrichtungen, die aus den als Polräder gemäß der Fig. 2a ausgebildeten Gebereinrichtungen 27-30 und den jeweils zugeordneten Magnetfeldsensoren 31-34 bestehen.

Die durch die Sensoreinrichtungen detektierten Drehzahl-Ausgangssignale werden dann an die zur zentralen Rechnereinheit 1 gehörigen Signalverarbeitungseinrichtung 100 weitergeleitet und hier mit Hilfe der Tiefpaß-Filter 35-38 von hochfrequenten Rauschanteilen gefiltert, wonach die das Drehzahl-.Ausgangssignal repräsentierende Schwingung über Schmitt-Trigger 39-42 in ein Rechtecksignal aus Einzelimpulsen umgewandelt wird.

Die jeweils erhaltenen Einzelimpulse aus den Drehzahl-Ausgangssignalen der einzelnen Räder gelangen dann zu den Zeitkontrolleinrichtungen 50 bis 53 (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen $\Delta T_{0(i)}$ (t) zwischen zwei auf- bzw. absteigenden und mit den Zeiten für die Teildrehungen korrelierenden Flanken des Rechtecksignales (Nulldurchgangszeiten) erfolgt.

Das Frequenzspektrum des so erhaltenen Nulldurchgangszeiten-Signales wird dann den Rechneinheiten 64 - 67 zugeleitet, in denen eine Frequenzanalyse FT ($\Delta T_0$) in Form einer Fourrier-Transformation zur Ermittlung der spektralen Leistungsdichte durchgeführt wird.

Nachfolgend werden die spektralen Leistungsdichten der entsprechend verarbeiteten jeweiligen Drehzahl-Ausgangssignale der einzelnen Räder in den Recheneinheiten 68 - 71 einer Integration über bestimmte Frequenzbereiche unterzogen, sodaß sich für das Integral ein Wert des Ausdrucks

$$\int FT(\Delta T_0)df \equiv I_{f(i)}$$

ergibt. Die so im Hinblick auf die jeweiligen Drehzahl-Ausgangssignale der einzelnen Räder ermittelten Integralwerte $I_{fFL(i)}$, $I_{fFR(i)}$, $I_{fRL(i)}$, und $I_{fRR(i)}$ werden dann zunächst einem Speicher 72 und dann einer Vergleichseinrichtung 73 zugeleitet, welche die ermittelten Integralwerte mit Referenz- und/oder Schwellenwerten vergleicht und bei Überschreitung einer vorgegebenen Differenz zu den Referenz- und/oder Schwellenwerten ein Warnsignal an die im Blickfeld des Fahrers angeordnete Warneinrichtung 10 abgibt.

### Bezugszeichenliste

| | |
|---|---|
| 1 | zentrale Recheneinheit |
| 2-5 | Sensoreinrichtung |
| 6-9 | Rad |
| 10 | Anzeigeeinrichtung |
| 11 | Polrad |
| 12 | Magnetfeldsensor |
| 13 | gezahntes Rad / Gebereinrichtung |
| 14 | Magnetfeldsensor |
| 15 | Reifenseitenwand |
| 16 | permanentmagnetische Areale |
| 17 | Magnetfeldsensor |
| 24 | Zeitintervall |
| 25 | --- |
| 26 | --- |
| 27-30 | aktive Gebereinrichtung |
| 31-34 | Magnetfeldsensor |
| 35-38 | Tiefpaß-Filter |
| 39-42 | Schmitt-Trigger |
| 43-46 | Zeitkontrolleinrichtung |
| 43'-46' | Zähleinrichtung |
| 47 | Speicher |
| 48 | Rechnerschaltung |
| 49 | Vergleichseinrichtung |
| 50-53 | Zeitkontrolleinrichtung (Timer) |
| 54 | Speicher |
| 55 | Rechnerschaltung |
| 56 | Vergleichseinrichtung |
| 57-60 | Recheneinheit zur Frequenzbestimmung |

| | mittels Kehrwertbildung |
|---|---|
| 61 | Speicher |
| 62 | Rechnerschaltung |
| 63 | Vergleichseinrichtung |
| 64-67 | Recheneinheit zur Durchführung einer Fourrier-Transformation |
| 68-71 | Recheneinheit zur Durchführung einer Integration |
| 72 | Speicher |
| 73 | Vergleichseinrichtung |
| 100 | Signalverarbeitungseinrichtung |
| 200 | Geschwindigkeitskurve |
| 201, 202 | Referenz- oder Schwellenwert |
| 203 | Zeitverhalten des normalen Drehzahl-Ausgangssignales |
| 204 | Zeitverhalten des überlagerten Drehzahl-Ausgangssignales |
| 205 | Nulldurchgangszeiten-Signal des normalen Drehzahl-Ausgangssignales |
| 206 | Nulldurchgangszeiten-Signal des überlagerten Drehzahl-Ausgangssignales |
| 207 | Frequenzen der Nulldurchgangszeiten des normalen Drehzahl-Ausgangssignales |
| 208 | Frequenzen der Nulldurchgangszeiten des überlagerten Drehzahl-Ausgangssignales |
| 209 | aus dem normalen Drehzahl-Ausgangssignal ermittelte Radgeschwindigkeiten |
| 209' - 209''' | aus dem normalen Drehzahl-Ausgangssignal bei realem Fahrbetrieb ermittelte Radgeschwindigkeiten |
| 210 | aus dem überlagerten Drehzahl-Ausgangssignal ermittelte Radgeschwindigkeiten |
| 210' | aus dem überlagerten Drehzahl-Ausgangssignal bei realem Fahrbetrieb ermittelte Radgeschwindigkeiten |
| 211 | aus den Radgeschwindigkeiten des normalen Drehzahl-Ausgangssignales ermittelte Radbeschleunigungen |
| 212 | aus den Radgeschwindigkeiten des überlagerten Drehzahl-Ausgangssignales ermittelte Radbeschleunigungen |
| 213 | durch Mittelwertbildung gefilterte Radbeschleunigungen |
| 214 | spektrale Leistungsdichte (normales Drehzahl-Ausgangssignal) |
| 215 | spektrale Leistungsdichte (überlagertes Drehzahl-Ausgangssignal) |

**Patentansprüche**

1. Verfahren zur Ermittlung sich anbahnender Laufstreifanablösungen eines Luftreifens an einem Fahrzeug, bei dem mindestens an jeder Achse, vorzugsweise an jedem Rad, eine permanent vorhandene erste periodische und zur Raddrehzahl proportionale Schwingung erzeugt und als Drehzahl- Ausgangssignal einer Signalverarbeitungseinrichtung zugeleitet wird, und bei dem wenigstens eine separat definierte, für sich anbahnende Laufstreifenablösungen charakteristische und zur Raddrehzahl proportionale periodische Schwingung der ersten Schwingung bzw. dem Drehzahl-Ausgangssignal überlagert wird, und bei dem die Signalverarbeitungseinrichtung eine Überlagerung der ersten periodischen Schwingung mit der separat definierten und für sich anbahnende Laufstreifenablösungen charakteristischen periodischen Schwingung detektiert und zu einem Warnsignal verarbeitet.

2. Verfahren nach Anspruch 1, bei dem mindestens an jeder Achse, vorzugsweise an jedem Rad, eine permanent vorhandene erste periodische und zur Raddrehzahl proportionale Schwingung erzeugt und als Drehzahl- Ausgangssignal einer Signalverarbeitungseinrichtung zugeleitet wird, wobei das Drehzahl- Ausgangssignal durch aktive oder passive Magnetfeldsensoren bereitgestellt wird, indem relativ zu letzteren rotierende magnetisch aktive oder passive und an mit dem Rad drehenden oder an feststehenden Teilen des Fahrzeuges befindliche Einrichtungen, vorzugsweise Encoder, eine zur Raddrehzahl proportionale periodische Magnetfeldänderung erzeugen, und bei dem sich anbahnende Laufstreifenablösungen wenigstens eine separat definierte, für sich anbahnende Laufstreifenablösungen charakteristische und zur Raddrehzahl proportionale periodische Schwingung der ersten Schwingung bzw. dem Drehzahl-Ausgangssignal überlagert werden, und bei dem die Signalverarbeitungsseinrichtung eine Überlagerung der ersten periodischen Schwingung mit der separat definierten und für sich anbahnende Laufstreifenablösungen charakteristischen periodischen Schwingung detektiert und zu.einem Warnsignal verarbeitet werden.

3. Verfahren nach Anspruch 1 oder 2, **dadurch gekennzeichnet, daß** das Drehzahl-Ausgangssignal nach einer Verarbeitung in der Signalverarbeitungsseinrichtung mit einem oder mehreren Referenz- und / oder Schwellenwerten verglichen und die Überlagerung mit den separaten und für sich anbahnende Laufstreifenablösungen charakteristischen periodischen Schwingungen anhand einer Überschreitung der Referenz- und / oder Schwellenwerte erkannt und zu einem Warnsignal verarbeitet wird.

4. Verfahren nach Anspruch 3, **dadurch gekennzeichnet, daß** das Drehzahl-Ausgangssignal eines Rades oder einer Achse nach einer Verarbeitung in der Signalverarbeitungsseinrichtung mit Drehzahl-Ausgangssignalen der übrigen Räder oder Achsen als Referenzwerten verglichen wird.

**5.** Verfahren nach Anspruch 3 oder 4, **dadurch gekennzeichnet, daß** in der Signalverarbeitungseinrichtung aus dem Drehzahl-Ausgangssignal die Radgeschwindigkeit für vorgegebene Zeitintervalle errechnet und mit einem oder mehreren Referenz-Radgeschwindigkeiten und / oder Schwellenwerten verglichen wird, wobei ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach
b) innerhalb von definierten und mehrere aufeinanderfolgende Raddrehwinkel beinhaltenden Zählzeiten $T_L$ aus den für die Teildrehungen ermittelten Zeiten und deren Anzahl eine mittlere Raddrehgeschwindigkeit für eine oder mehrere Radumdrehungen innerhalb der Zählzeiten errechnet und gespeichert wird, wonach
c) die gemittelten Raddrehgeschwindigkeiten bzw. deren Verlauf mit Referenz- und / oder Schwellenwerten verglichen werden, wobei
d) bei Überschreitung der Referenz- und / oder Schwellenwerte ein Warnsignal ausgegeben wird.

**6.** Verfahren nach Anspruch 3 oder 4, **dadurch gekennzeichnet, daß** ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach
b) ein Mittelwert aus mehreren solchen aufeinanderfolgend ermittelten Zeiten für eine oder mehrere Radumdrehungen errechnet und gespeichert wird, wonach
c) die Abweichungen der gem. a) ermittelten und gespeicherten Zeiten von dem gem. b) errechneten Mittelwert ermittelt werden, und danach
d) die ermittelten Abweichungen mit Referenz- und / oder Schwellenwerten verglichen werden, wobei
e) bei Überschreitung der Referenz- und / oder Schwellenwerte ein Warnsignal ausgegeben wird.

**7.** Verfahren nach Anspruch 3 oder 4, **dadurch gekennzeichnet, daß** ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach
b) mit Hilfe einer oder mehrerer Recheneinheiten die Frequenzen der gem. a) ermittelten und gespeicherten Zeiten durch Kehrwertbildung errechnet und danach gespeichert werden, wobei anschließend
c) ein Mittelwert der gem. b) ermittelten Frequenzen für eine oder mehrere Radumdrehungen errechnet und gespeichert wird, wonach
d) die Abweichungen der gem. b) ermittelten und gespeicherten Frequenzen von dem gem. c) errechneten Mittelwert ermittelt werden, und danach
e) die ermittelten Abweichungen mit Referenz- und / oder Schwellenwerten verglichen werden, wobei
f) bei Überschreitung der Referenz- und / oder Schwellenwerte ein Warnsignal ausgegeben wird.

**8.** Verfahren nach Anspruch 3 oder 4, **dadurch gekennzeichnet, daß** ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach
b) mit Hilfe einer oder mehrerer Recheneinheiten das Frequenzspektrum der gem. a) ermittelten und gespeicherten Zeiten einer Frequenzanalyse zur Ermittlung der spektralen Leistungsdichte unterzogen wird, wobei anschließend
c) mit Hilfe einer oder mehrerer Recheneinheiten die ermittelten spektralen Leistungsdichten einer Integration über bestimmte ausgewählte Frequenzintervalle unterzogen und danach gespeichert werden, wonach
d) der Integralwert der ausgewählten Frequenzintervalle verglichen wird mit einem Referenz- oder Schwellenwert, und
e) bei Überschreitung der Referenz- oder Schwellenwerte ein Warnsignal ausgegeben wird.

**9.** Verfahren nach Anspruch 8, **dadurch gekennzeichnet, daß** als ausgewählte Frequenzintervalle genau solche verwendet werden, die einem Vielfachen der Raddrehfrequenz entsprechen, wobei vorzugsweise niedere Vielfache der Raddrehfrequenz mit n = 1,2,3 betrachtet werden.

**10.** Verfahren nach Anspruch 3 oder 4, **dadurch gekennzeichnet, daß** ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach
b) mit Hilfe einer oder mehrerer Recheneinheiten aus den gem. a) ermittelten und gespeicherten Zeiten die augenblicklichen Radgeschwindigkeiten errechnet und danach gespeichert werden, wobei anschließend
c) ein Mittelwert der gem. b) ermittelten Radgeschwindigkeiten für eine oder mehrere Radumdrehungen errechnet und gespeichert wird, wonach
d) die Abweichungen der gem. b) ermittelten und gespeicherten Radgeschwindigkeiten von dem gem. c) errechneten Mittelwert ermittelt werden, und danach
e) die ermittelten Abweichungen mit Referenz- und / oder Schwellenwerten verglichen werden, wobei
f) bei Überschreitung der Referenz- und / oder Schwellenwerte ein Warnsignal ausgegeben wird.

**11.** Verfahren nach Anspruch 3 oder 4, **dadurch gekennzeichnet, daß** ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach
b) mit Hilfe einer oder mehrerer Recheneinheiten aus den gem. a) ermittelten und gespeicherten Zeiten die augenblicklichen Radbeschleunigungen errechnet und danach gespeichert werden, wobei anschließend
c) ein Mittelwert der gem. b) errechneten Radbeschleunigungen für eine oder mehrere Radumdrehungen errechnet und gespeichert wird, wonach
d) die Abweichungen der gem. b) errechneten Radbeschleunigungen von dem gem. c) errechneten Mittelwert oder von einem Nullwert ermittelt werden, und danach
e) die ermittelten Abweichungen mit Referenz- und / oder Schwellenwerten verglichen werden, wobei
f) bei Überschreitung der Referenz- und / oder Schwellenwerte ein Warnsignal ausgegeben wird.

**12.** Verfahren nach Anspruch 6 bis 10, **dadurch gekennzeichnet, daß** die in einer oder mehreren Zeitkontrolleinrichtungen gemessenen Zeitdifferenzen zwischen den Nulldurchgängen vor der weiteren Verarbeitung zunächst einer drehsynchronen Mittelung in der Art unterzogen werden, daß über mehrere Radumdrehungen aus den in Bezug auf eine Radumdrehung in gleichen Zeitintervallen bzw. in gleichen Drehwinkelintervallen gemessenen Nulldurchgangszeiten ein Mittelwert gebildet wird, der dann der weiteren Signalverarbeitung zugrunde liegt.

**13.** Verwendung eines Verfahrens zur Ermittlung sich anbahnender Laufstreifanablösungen eines Luftreifens an einem Fahrzeug nach Anspruch 1 bis 12 innerhalb eines Kontrollsystems für luftbereifte Fahrzeugräder, insbesondere innerhalb eines Anti-Blokkier-Systems, wobei durch das Kontrollsystem mindestens an jeder Achse, vorzugsweise an jedem Rad, eine permanent vorhandene erste periodische und zur Raddrehzahl proportionale Schwingung erzeugt und als Drehzahl-Ausgangssignal einer Signalverarbeitungseinrichtung des Kontrollsystems zugeleitet wird, wobei sich anbahnende Laufstreifenablösungen wenigstens eine separat definierte, für sich anbahnende Laufstreifenablösungen charakteristische und zur Raddrehzahl proportionale periodische Schwingung der ersten Schwingung bzw. dem Drehzahl-Ausgangssignal überlagert werden, und bei dem die Signalverarbeitungseinrichtung eine Überlagerung der ersten periodischen Schwingung mit der separat definierten und für sich anbahnende Laufstreifenablösungen charakteristischen periodischen Schwingung detektiert und zu einem Warnsignal verarbeitet.

**14.** Verwendung eines Verfahrens zur Ermittlung sich anbahnender Laufstreifanablösungen eines Luftreifens an einem Fahrzeug nach Anspruch 13, **dadurch gekennzeichnet, dass** der errechnete Mittelwert zunächst um einen ersten Referenzwert bereinigt wird, welcher Fertigungstoleranzen des ABS-Signalgebers für das jeweilige Rad repräsentiert.

**15.** Verfahren zur Ermittlung sich anbahnender Laufstreifanablösungen eines Luftreifens an einem Fahrzeug nach einem der Ansprüche 1 bis 12 **dadurch gekennzeichnet, dass** parallel zur Erfassung des Drehzahl-Ausgangssignals der Reifeninnendruck durch einen Druckerfasungseinrichtung ermittelt wird, wobei Abweichungen von einem vorgegebenen Sollwert um einen vorbestimmten Betrag zu einem für den Fahrer wahrnehmbaren Signal führen.

**16.** Verfahren zur Ermittlung sich anbahnender Laufstreifanablösungen eines Luftreifens an einem Fahrzeug nach Anspruch 15, **dadurch gekennzeichnet, dass** der durch die Druckerfassungseinrichtung ermittelte Druckwert in Korrelation zum Drehzahl-Ausgangssignal gebracht wird.

17. Verfahren zur Ermittlung sich anbahnender Laufstreifanablösungen eines Luftreifens an einem Fahrzeug nach Anspruch 16, **dadurch gekennzeichnet, dass** als Druckerfassungseinrichtung ein Deflation Detection System verwendet wird, bei welchem luftdruckbedingte Veränderungen des Abrollumfangs des Reifens ermittelt werden.

**Claims**

1. Method for detecting imminent separation of the tread from a pneumatic tyre on a vehicle, in which a permanently present, first periodic oscillation which is proportional to the wheel speed is generated at least at each axle, preferably at each wheel, and is fed as a rotational-speed output signal to a signal processing device, and in which at least one separately defined periodic oscillation which is characteristic of imminent separation of the tread and is proportional to the wheel speed is superimposed on the first oscillation or the rotational-speed output signal, and in which the signal processing device detects superimposition of the separately defined periodic oscillation which is characteristic of imminent separation of the tread on the first periodic oscillation and processes it to form a warning signal.

2. Method according to Claim 1, in which a permanently present, first periodic oscillation which is proportional to the wheel speed is generated at least at each axle, preferably at each wheel, and is fed as a rotational-speed output signal to a signal processing device, the rotational-speed output signal being made available by means of active or passive magnetic field sensors by magnetically active or passive devices, preferably encoders, which rotate relative to the latter and are located on parts of the vehicle which rotate with the wheel or are fixed, generate a periodic change in the magnetic field which is proportional to the wheel speed, and in which at least a separately defined periodic oscillation which is characteristic of imminent separation of the tread and is proportional to the wheel speed is superimposed on the first oscillation or the rotational-speed output signal, and in which the signal processing device detects superimposition of the separately defined periodic oscillation which is characteristic of imminent separation of the tread on the first periodic oscillation and processes it to form a warning signal.

3. Method according to Claim 1 or 2 **characterized in that**, after processing in the signal processing device, the rotational-speed output signal is compared with one or more reference values and/or threshold values and the superimposition of the separate periodic oscillations which are characteristic of imminent separation of the tread is detected by reference to the fact that the reference values and/or threshold values are exceeded, and is processed to form a warning signal.

4. Method according to Claim 3 **characterized in that**, after processing in the signal processing device, the rotational-speed output signal of a wheel or an axle is compared with rotational-speed output signals of the other wheels or axles as reference values.

5. Method according to Claim 3 or 4, **characterized in that**, the wheel speed for predefined time internals is calculated from the rotational-speed output signal in the signal processing device and is compared with one or more reference wheel speeds and/or threshold values, in which case, on the basis of the oscillation representing the rotational-speed output signal in the signal processing device,

   a) at first the corresponding times for the partial rotations of the wheel which are determined by the defined wheel rotational angles are obtained and stored for a plurality of successive and defined wheel rotational angles, and then
   b) within defined counting times $T_L$ which contain a plurality of successive wheel rotational angles, an average wheel rotational speed for one or more wheel rotations within the counting times is calculated on the basis of the times obtained for the partial rotations and their number, and stored, after which
   c) the averaged wheel rotational speeds and/or their profile are/is compared with reference values and/or threshold values,
   d) a warning signal being issued if the reference values and/or threshold values are exceeded.

6. Method according to Claim 3 or 4 **characterized in that**, on the basis of the oscillation representing the rotational-speed output signal in the signal processing device

   a) at first, for a plurality of successive and defined wheel rotational angles, the corresponding times for the partial rotations of the wheel which are determined by the defined wheel rotational angles are obtained and stored, and then
   b) an average value is calculated from a plurality of such successively obtained times for one or more wheel rotations and stored, after which
   c) the differences in the times which are obtained and stored according to a) from the average value calculated according to b) are obtained, and then

d) the differences which are obtained are compared with reference values and/or threshold values,

e) a warning signal being issued if the reference values and/or threshold values are exceeded.

7. Method according to Claim 3 or 4 **characterized in that**, on the basis of the oscillation representing the rotational-speed output signal in the signal processing device

    a) at first, for a plurality of successive and defined wheel rotational angles, the corresponding times for the partial rotations of the wheel which are determined by the defined wheel rotational angles are obtained and stored, and then

    b) the frequencies of the times obtained and stored according to a) are calculated by forming reciprocal values using one or more computing units, and then stored,

    c) an average value of the frequencies which are obtained according to b) being then calculated for one or more wheel rotations and stored, after which

    d) the differences in the frequencies which are obtained and stored according to b) from the average value calculated according to c) are obtained, and then

    e) the differences which are obtained are compared with reference values and/or threshold values,

    f) a warning signal being issued if the reference values and/or threshold values are exceeded.

8. Method according to Claim 3 or 4 **characterized in that**, on the basis of the oscillation representing the rotational-speed output signal in the signal processing device

    a) at first, for a plurality of successive and defined wheel rotational angles, the corresponding times for the partial rotations of the wheel which are determined by the defined wheel rotational angles are obtained and stored, and then

    b) the frequency spectrum of the times which are obtained and stored according to a) are subjected to frequency analysis, using one or more computing units, in order to obtain the spectral power density,

    c) the spectral power densities which are obtained being then subjected to integration over specific, selected frequency intervals using one or more computing units, and then stored, after which

    d) the integral value of the selected frequency intervals is compared with a reference value or threshold value, and

e) a warning signal is issued if the reference values or threshold values are exceeded.

9. Method according to Claim 8 **characterized in that**, the selected frequency intervals which are used are precisely those which correspond to a multiple of the wheel rotational frequency, preferably low multiples of the wheel rotational frequency, where n = 1,2,3, being considered.

10. Method according to Claim 3 or 4 **characterized in that**, on the basis of the oscillation representing the rotational-speed output signal in the signal processing device

    a) at first, for a plurality of successive and defined wheel rotational angles, the corresponding times for the partial rotations of the wheel which are determined by the defined wheel rotational angles are obtained and stored, and then

    b) the instantaneous wheel speeds are calculated using one or more computing units, from the times which are obtained and stored according to a), and then stored,

    c) an average value of the wheel speeds obtained according to b) being then calculated for one or more wheel rotations, and stored, after which

    d) the differences in the wheel speeds which are obtained and stored according to b) from the average value calculated according to c) are obtained, and then

    e) the differences which are obtained are compared with reference values and/or threshold values,

    f) a warning signal being issued if the reference values and/or threshold values are exceeded.

11. Method according to Claim 3 or 4 **characterized in that**, on the basis of the oscillation representing the rotational-speed output signal in the signal processing device

    a) at first, for a plurality of successive and defined wheel rotational angles, the corresponding times for the partial rotations of the wheel which are determined by the defined wheel rotational angles are obtained and stored, and then

    b) the instantaneous wheel accelerations are calculated using one or more computing units, from the times which are obtained and stored according to a), and then stored,

    c) an average value of the wheel accelerations calculated according to b) being then calculated for one or more wheel rotations, and stored, after which

    d) the differences in the wheel accelerations which are calculated according to b) from the average value calculated according to c) or a zero value are obtained, and then

e) the differences which are obtained are compared with reference values and/or threshold values,

f) a warning signal being issued if the reference values and/or threshold values are exceeded.

12. Method according to Claims 6 to 10, **characterized in that**, the time differences, measured in one or more timing devices, between the zero crossovers are firstly subjected, before further processing, to a rotationally synchronized averaging in such a way that an average value is formed over a plurality of wheel rotations from the zero crossover times which are measured with respect to one rotation of the wheel at identical time intervals or at identical rotational angle intervals, and said average value is then used as the basis for further signal processing.

13. Use of a method for detecting imminent separation of the tread from a pneumatic tyre on a vehicle according to Claims 1 to 12 within a checking system for vehicle wheels with pneumatic tyres, in particular within an anti-lock brake system, a permanently present, first periodic oscillation which is proportional to the wheel speed being generated at least at each axle, preferably at each wheel, by the checking system, and being fed, as a rotational-speed output signal, to a signal processing device of the checking system, at least one separately defined periodic oscillation which is characteristic of imminent separation of the tread and is proportional to the wheel speed being superimposed on the first oscillation or the rotational-speed output signal, and in which the signal processing device detects superimposition of the separately defined periodic oscillation which is characteristic of imminent separation of the tread on the first periodic oscillation and processes it to form a warning signal.

14. Use of a method for detecting imminent separation of the tread from a pneumatic tyre on a vehicle according to Claim 13, **characterized in that** the calculated mean value is firstly cleaned of a first reference value which represents fabrication tolerances of the ABS signal transmitter for the respective wheel

15. Method for detecting imminent separation of the tread from a pneumatic tyre on a vehicle according to one of Claims 1 to 12, **characterized in that**, parallel to the sensing of the rotational-speed output signal, the internal pressure of the tyre is obtained by means of a pressure-sensing device, differences from a predefined setpoint value by a predetermined amount giving rise to a signal which can be perceived by the driver.

16. Method for detecting imminent separation of the tread from a pneumatic tyre on a vehicle according to Claim 15, **characterized in that** the pressure value which is determined by the pressure-sensing device is placed in correlation with the rotational-speed output signal.

17. Method for detecting imminent separation of the tread from a pneumatic tyre on a vehicle according to Claim 16, **characterized in that** a deflation detection system in which changes in the rolling circumference of the tyre due to air pressure are detected is used as a pressure-sensing device.

**Revendications**

1. Procédé pour déterminer l'imminence du détachement de la bande de roulement d'un pneumatique sur un véhicule, avec lequel une première oscillation périodique présente en permanence et proportionnelle à la vitesse de rotation de la roue est générée au moins au niveau de chaque essieu, de préférence au niveau de chaque roue, pour ensuite être acheminée sous la forme d'un signal de sortie de la vitesse de rotation à un dispositif de traitement du signal, et avec lequel au moins une oscillation périodique, définie séparément, caractéristique de l'imminence du détachement de la bande de roulement et proportionnelle à la vitesse de rotation de la roue est superposée à la première oscillation ou au signal de sortie de la vitesse de rotation, et avec lequel le dispositif de traitement du signal détecte une superposition de la première oscillation périodique par l'oscillation périodique définie séparément et caractéristique de l'imminence du détachement de la bande de roulement et la traite comme un signal d'alerte.

2. Procédé selon la revendication 1, avec lequel une première oscillation périodique présente en permanence et proportionnelle à la vitesse de rotation de la roue est générée au moins au niveau de chaque essieu, de préférence au niveau de chaque roue, pour ensuite être acheminée sous la forme d'un signal de sortie de la vitesse de rotation à un dispositif de traitement du signal, le signal de sortie de la vitesse de rotation étant fourni par des capteurs de champ magnétique actifs ou passifs en ce que des dispositifs, de préférence des codeurs magnétiquement actifs ou passifs en rotation par rapport à ces derniers et tournant avec la roue ou se trouvant sur des parties fixes du véhicule produisant une variation du champ magnétique périodique proportionnelle à la vitesse de rotation de la roue, et au moins une oscillation périodique, définie séparément, caractéristique de l'imminence du détachement de la bande de roulement et proportionnelle à la vitesse de rotation de la roue est superposée à la première oscillation ou au signal de sortie de la vitesse de rotation, et avec lequel le dispositif de traitement du signal détecte une superposition de la première oscillation périodique par l'oscillation périodique définie séparément et caractéristique de l'imminence du détachement de la bande de roulement et la traite comme un signal d'alerte.

3. Procédé selon la revendication 1 ou 2, **caractérisé en ce que** le signal de sortie de la vitesse de rotation, après avoir été traité dans le dispositif de traitement du signal, est comparé avec une ou plusieurs valeurs de référence et/ou de seuil et la superposition avec les oscillations périodiques séparées et caractéristiques de l'imminence du détachement de la bande de roulement est détectée au moyen d'un dépassement des valeurs de référence et/ou de seuil et traité comme un signal d'alerte.

4. Procédé selon la revendication 3, **caractérisé en ce que** le signal de sortie de la vitesse de rotation d'une roue ou d'un essieu, après avoir été traité dans le dispositif de traitement du signal, est comparé avec les signaux de sortie de vitesse de rotation des autres roues ou essieux faisant office de valeurs de référence.

5. Procédé selon la revendication 3 ou 4, **caractérisé en ce que** la vitesse de la roue est calculée pendant un intervalle de temps prédéfini dans le dispositif de traitement du signal à partir du signal de sortie de la vitesse de rotation puis comparée avec une ou plusieurs vitesses de rotation de roue de référence et/ou valeurs de seuil, à l'occasion de quoi, dans le dispositif de traitement du signal, en partant de l'oscillation représentant le signal de sortie de la vitesse de rotation,

   a) les durées correspondant aux rotations partielles de la roue déterminées par les angles de rotation de la roue définis étant tout d'abord calculées et enregistrées pour plusieurs angles de rotation de la roue successifs et définis et ensuite

   b) dans des intervalles de comptage $T_L$ définis et contenant plusieurs angles de rotation de la roue successifs, une vitesse de rotation moyenne de la roue est calculée et enregistrée pour une ou plusieurs rotations de la roue au sein des intervalles de comptage à partir des durées déterminées pour les rotations partielles et leur nombre, après quoi

   c) les vitesses de rotation moyennes de la roue ou leur courbe étant comparées avec des valeurs de référence et/ou de seuil,

   d) un signal d'alerte étant délivré en cas de dépassement des valeurs de référence et/ou de seuil.

6. Procédé selon la revendication 3 ou 4, **caractérisé en ce qu'**en partant de l'oscillation représentant le signal de sortie de la vitesse de rotation, dans le dispositif de traitement du signal,

   a) les durées correspondant aux rotations partielles de la roue déterminées par les angles de rotation de la roue définis sont tout d'abord calculées et enregistrées pour plusieurs angles de rotation de la roue successifs et définis et ensuite

   b) une valeur moyenne de plusieurs de ces durées successives déterminées est calculée et enregistrée pour une ou plusieurs rotations de la roue, après quoi

   c) l'écart entre les durées déterminées et enregistrées selon a) et la valeur moyenne calculée selon b) est déterminé et ensuite

   d) les écarts déterminés sont comparés avec des valeurs de référence et/ou de seuil,

   e) un signal d'alerte étant délivré en cas de dépassement des valeurs de référence et/ou de seuil.

7. Procédé selon la revendication 3 ou 4, **caractérisé en ce qu'**en partant de l'oscillation représentant le signal de sortie de la vitesse de rotation, dans le dispositif de traitement du signal,

   a) les durées correspondant aux rotations partielles de la roue déterminées par les angles de rotation de la roue définis sont tout d'abord calculées et enregistrées pour plusieurs angles de rotation de la roue successifs et définis et ensuite

   b) les fréquences des durées déterminées et enregistrées selon a) sont calculées par calcul de l'inverse à l'aide d'une ou de plusieurs unités de calcul et sont ensuite enregistrées,

   c) une valeur moyenne des fréquences déterminées selon b) étant ensuite calculée puis enregistrée pour plusieurs rotations de la roue, après quoi

   d) les écarts entre les fréquences déterminées et enregistrées selon b) et la valeur moyenne calculée selon c) sont déterminés et ensuite

   e) les écarts déterminés sont comparés avec des valeurs de référence et/ou de seuil,

   f) un signal d'alerte étant délivré en cas de dépassement des valeurs de référence et/ou de seuil.

8. Procédé selon la revendication 3 ou 4, **caractérisé en ce qu'**en partant de l'oscillation représentant le signal de sortie de la vitesse de rotation, dans le dispositif de traitement du signal,

   a) les durées correspondant aux rotations partielles de la roue déterminées par les angles de rotation de la roue définis sont tout d'abord calculées et enregistrées pour plusieurs angles de rotation de la roue successifs et définis et ensuite

b) le spectre des fréquences des durées déterminées et enregistrées selon a) est soumis à une analyse de fréquence à l'aide d'une ou de plusieurs unités de calcul afin de déterminer la densité de puissance spectrale,

c) les densités de puissance spectrale déterminées sont soumises à une intégration sur un intervalle de fréquence donné choisi à l'aide d'une ou de plusieurs unités de calcul, après quoi

d) la valeur d'intégrale de l'intervalle de fréquence choisi est comparée avec une valeur de référence et/ou de seuil, et

e) un signal d'alerte est délivré en cas de dépassement de la valeur de référence ou de seuil.

9. Procédé selon la revendication 8, **caractérisé en ce que** l'intervalle de fréquence choisi est justement celui qui correspond à un multiple de la fréquence de rotation de la roue, une faible multiple de la fréquence de rotation de la roue avec n = 1, 2, 3 étant de préférence envisagé.

10. Procédé selon la revendication 3 ou 4, **caractérisé en ce qu'**en partant de l'oscillation représentant le signal de sortie de la vitesse de rotation, dans le dispositif de traitement du signal,

a) les durées correspondant aux rotations partielles de la roue déterminées par les angles de rotation de la roue définis sont tout d'abord calculées et enregistrées pour plusieurs angles de rotation de la roue successifs et définis et ensuite

b) les vitesses momentanées de la roue sont calculées à l'aide d'une ou de plusieurs unités de calcul à partir des durées déterminées et enregistrées selon a) et sont ensuite enregistrées,

c) une valeur moyenne des vitesses de la roue déterminées selon b) étant ensuite calculée puis enregistrée pour plusieurs rotations de la roue, après quoi

d) les écarts entre les vitesses de la roue déterminées et enregistrées selon b) et la valeur moyenne calculée selon c) sont déterminés et ensuite

e) les écarts déterminés sont comparés avec des valeurs de référence et/ou de seuil,

f) un signal d'alerte étant délivré en cas de dépassement des valeurs de référence et/ou de seuil.

11. Procédé selon la revendication 3 ou 4, **caractérisé en ce qu'**en partant de l'oscillation représentant le signal de sortie de la vitesse de rotation, dans le dispositif de traitement du signal,

a) les durées correspondant aux rotations partielles de la roue déterminées par les angles de rotation de la roue définis sont tout d'abord calculées et enregistrées pour plusieurs angles de rotation de la roue successifs et définis et ensuite

b) les accélérations momentanées de la roue sont calculées à l'aide d'une ou de plusieurs unités de calcul à partir des durées déterminées et enregistrées selon a) et sont ensuite enregistrées,

c) une valeur moyenne des accélérations de la roue calculées selon b) étant ensuite calculée puis enregistrée pour plusieurs rotations de la roue, après quoi

d) les écarts entre les accélérations de la roue calculées selon b) et la valeur moyenne calculée selon c) ou une valeur nulle sont déterminés et ensuite

e) les écarts déterminés sont comparés avec des valeurs de référence et/ou de seuil,

f) un signal d'alerte étant délivré en cas de dépassement des valeurs de référence et/ou de seuil.

12. Procédé selon les revendications 6 à 10, **caractérisé en ce que** les différences de durée mesurées dans un ou plusieurs dispositifs de contrôle de durée entre les passages à zéro sont tout d'abord soumises à une moyennisation synchrone avec la rotation avant la suite du traitement de telle sorte qu'une valeur moyenne est calculée sur plusieurs rotations de la roue à partir des moments de passage à zéro mesurées en référence à une rotation de la roue à des intervalles de temps identiques ou à des intervalles d'angle de rotation identiques, laquelle sert ensuite de base à la suite du traitement du signal.

13. Utilisation d'un procédé pour déterminer l'imminence du détachement de la bande de roulement d'un pneumatique sur un véhicule selon les revendications 1 à 12 au sein d'un système de contrôle pour roues de véhicule à pneumatique, notamment au sein d'un système antiblocage, une première oscillation périodique présente en permanence et proportionnelle à la vitesse de rotation de la roue étant générée par le système de contrôle au moins au niveau de chaque essieu, de préférence au niveau de chaque roue puis acheminée sous la forme d'un signal de sortie de la vitesse de rotation à un dispositif de traitement du signal du système de contrôle, l'imminence du détachement de la bande de roulement d'au moins une oscillation périodique, définie séparément, caractéristique de l'imminence du détachement de la bande de roulement et proportionnelle à la vitesse de rotation de la roue étant superposée à la première oscillation ou au signal de sortie de la vitesse de rotation, et avec laquelle le dispositif de traitement du signal détecte une superposition de la première oscillation périodique par l'oscillation périodique définie séparément et caractéristique de l'imminence du détachement de la bande de roulement et la traite comme un signal d'alerte.

**14.** Utilisation d'un procédé pour déterminer l'imminence du détachement de la bande de roulement d'un pneumatique sur un véhicule selon la revendication 13, **caractérisée en ce que** la valeur moyenne calculée est tout d'abord corrigée avec une première valeur de référence qui représente les tolérances de fabrication du générateur de signal ABS pour la roue correspondante.

**15.** Procédé pour déterminer l'imminence du détachement de la bande de roulement d'un pneumatique sur un véhicule selon l'une des revendications 1 à 12, **caractérisé en ce que** la pression intérieure du pneumatique est déterminée par un dispositif d'acquisition de la pression parallèlement à la détection du signal de sortie de la vitesse de rotation, les écarts d'un niveau donné par rapport à une valeur de consigne prédéfinie donnant lieu à un signal perceptible par le conducteur.

**16.** Procédé pour déterminer l'imminence du détachement de la bande de roulement d'un pneumatique sur un véhicule selon la revendication 15, **caractérisé en ce que** la valeur de la pression déterminée par le dispositif d'acquisition de la pression est mise en corrélation avec le signal de sortie de la vitesse de rotation.

**17.** Procédé pour déterminer l'imminence du détachement de la bande de roulement d'un pneumatique sur un véhicule selon la revendication 16, **caractérisé en ce que** le dispositif d'acquisition de la pression employé est un système de détection de dégonflage avec lequel sont déterminées les modifications liées à la pression de l'air du périmètre de déroulement du pneumatique.

FIG. 1

FIG. 2

FIG. 3

FIG. 4

# FIG. 5a

# FIG. 5b

**FIG. 6a**

EP 1 308 320 B1

FIG. 6b

**FIG. 7a**

# FIG. 7b

## FIG. 7c

## FIG. 7d

# FIG. 7e

EP 1 308 320 B1

FIG. 7f

FIG. 8

FIG. 9

FIG. 10

EP 1 308 320 B1

FIG. 11

EP 1 308 320 B1